(19) **Europäisches Patentamt / European Patent Office / Office européen des brevets**

(11) **EP 4 723 629 A1**

(12) **EUROPEAN PATENT APPLICATION**
published in accordance with Art. 153(4) EPC

(43) Date of publication:
08.04.2026 Bulletin 2026/15

(21) Application number: 24870052.8

(22) Date of filing: 25.07.2024

(51) International Patent Classification (IPC):
*H04N 19/124* (2014.01)    *H04N 19/13* (2014.01)
*H04N 19/91* (2014.01)

(52) Cooperative Patent Classification (CPC):
G06N 3/0455; G06N 3/08; G06T 9/002;
G06V 10/7715

(86) International application number:
PCT/CN2024/107495

(87) International publication number:
WO 2025/066498 (03.04.2025 Gazette 2025/14)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 25.09.2023 CN 202311256663

(71) Applicant: **Tencent Technology (Shenzhen)
Company Limited
Shenzhen, Guangdong 518057 (CN)**

(72) Inventors:
• **TIAN, Kuan
  Shenzhen, Guangdong 518057 (CN)**
• **ZHANG, Jun
  Shenzhen, Guangdong 518057 (CN)**
• **GUAN, Yonghang
  Shenzhen, Guangdong 518057 (CN)**

(74) Representative: **EP&C
P.O. Box 3241
2280 GE Rijswijk (NL)**

(54) **VIDEO CODEC MODEL PROCESSING METHOD, VIDEO ENCODING METHOD, VIDEO DECODING METHOD AND RELATED DEVICE**

(57)     A video codec model processing method, executed by a computing device and comprising : acquiring a training video frame, extracting a feature map of the training video frame by means of a video codec model, and determining scale parameter values respectively corresponding to feature elements in the feature map (202); on the basis of a preset mapping relationship, respectively mapping the scale parameter values corresponding to the feature elements to obtain scale parameter mapping values respectively corresponding to the feature elements, the scale parameter mapping values being within a preset mapping value range (204); acquiring a constraint reference mapping value corresponding to each scale parameter mapping value, wherein the distance between the constraint reference mapping value and a rounding boundary value of the scale parameter mapping value corresponding to the constraint reference mapping value is greater than the distance between the scale parameter mapping value corresponding to the constraint reference mapping value and the rounding boundary value (206); on the basis of the difference between the scale parameter mapping value corresponding to each feature element and the constraint reference mapping value corresponding to each scale parameter mapping value, determining a quantization constraint loss of the training video frame (208); and updating at least some of model parameters of the video codec model on the basis of the quantization constraint loss, so as to obtain a trained video codec model (210).

FIG. 2

**Description**

RELATED APPLICATION

This application claims priority to Chinese Patent Application No. 2023112566635, entitled "VIDEO ENCODING AND DECODING MODEL PROCESSING METHOD, VIDEO ENCODING METHOD, VIDEO DECODING METHOD, AND RELATED DEVICE" filed on September 25, 2023, which is incorporated by reference in its entirety.

FIELD

The disclosure relates to the field of video encoding and decoding technologies, a video encoding and decoding model processing method, a video encoding method, a video decoding method, and a related device.

BACKGROUND

With development of computer technologies, video encoding and decoding technologies appear. A video frame may be compressed by encoding, and a compressed video frame may be restored by decoding. Video encoding and decoding may be widely applied to various scenarios, especially to a cross-platform video transmission scenario, for example, a real-time session application such as a video chat or a video conference.

In the related art, video encoding and decoding may be implemented by using a video encoding and decoding model. However, in a cross-platform video transmission process, because encoding and decoding performed by using the video encoding and decoding model are performed by different computer devices, there is often a problem that accuracy of a video frame obtained by decoding and reconstructing is relatively low.

SUMMARY

This application provides a video encoding and decoding model processing method and apparatus, a computer device, a computer-readable storage medium, and a computer program product, and provides a video encoding method and apparatus, a computer device, a computer-readable storage medium, and a computer program product, and a video decoding method and apparatus, a computer device, a computer-readable storage medium, and a computer program product.

According to an aspect, this application provides a video encoding and decoding model processing method, performed by a computer device, and including:

obtaining a training video frame, extracting a feature map of the training video frame by using a video encoding and decoding model, and determining a scale parameter value corresponding to each feature element in the feature map;

mapping each feature element to a preset mapping value range according to a preset mapping relationship, to obtain a scale parameter mapping value corresponding to each feature element;

obtaining a constraint reference mapping value corresponding to each scale parameter mapping value, a distance between the constraint reference mapping value and a rounding boundary value of the scale parameter mapping value corresponding to the constraint reference mapping value being farther than a distance between the scale parameter mapping value corresponding to the constraint reference mapping value and the rounding boundary value;

determining a quantization constraint loss of the training video frame based on a difference between the scale parameter mapping value corresponding to each feature element and the constraint reference mapping value corresponding to each scale parameter mapping value; and

updating at least a part of model parameters of the video encoding and decoding model based on the quantization constraint loss, to obtain a trained video encoding and decoding model.

According to another aspect, this application further provides a video encoding and decoding model processing apparatus. The apparatus includes:

a video frame obtaining module, configured to: obtain a training video frame, extract a feature map of the training video frame by using a video encoding and decoding model, and determine a scale parameter value corresponding to each feature element in the feature map;

a value mapping module, configured to map each feature element to a preset mapping value range according to a preset mapping relationship, to obtain a scale parameter mapping value corresponding to each feature element;

a loss determination module, configured to obtain a constraint reference mapping value corresponding to each scale parameter mapping value, and determine a quantization constraint loss of the training video frame based on a difference between the scale parameter mapping value corresponding to each feature element and the constraint reference mapping value corresponding to the scale parameter mapping value, a distance between the constraint reference mapping value and a rounding boundary value of the scale parameter mapping value corresponding to the constraint reference mapping value being farther than a distance between the scale parameter mapping value corresponding to the constraint reference mapping value and the rounding boundary value; and

a parameter update module, configured to update at least a part of model parameters of the video encoding and decoding model based on the quantization constraint loss, to obtain a trained video encoding and decoding model.

According to another aspect, this application provides another video encoding and decoding model processing method, performed by a computer device, and including:

obtaining a training video frame, extracting a feature map of the training video frame by using a video encoding and decoding model, and determining a scale parameter value corresponding to each feature element in the feature map;

obtaining a constraint reference value corresponding to each scale parameter value, after being mapped to a preset mapping value range according to a preset mapping relationship, the constraint reference value being farther from a rounding boundary value of a scale parameter mapping value obtained by mapping the corresponding scale parameter value than the scale parameter value corresponding to the constraint reference value;

determining a quantization constraint loss of the training video frame based on a difference between each scale parameter value and the corresponding constraint reference value; and

updating at least a part of model parameters of the video encoding and decoding model based on the quantization constraint loss, to obtain a trained video encoding and decoding model.

According to another aspect, this application further provides another video encoding and decoding model processing apparatus. The apparatus includes:

a video frame obtaining module, configured to: obtain a training video frame, extract a feature map of the training video frame by using a video encoding and decoding model, and determine a scale parameter value corresponding to each feature element in the feature map;

a loss determination module, configured to obtain a constraint reference value corresponding to each scale parameter value, and determine a quantization constraint loss of the training video frame based on a difference between each scale parameter value and the corresponding constraint reference value, after being separately mapped to a preset mapping value range according to a preset mapping relationship, the constraint reference value being farther from a rounding boundary value of a scale parameter mapping value obtained by mapping the corresponding scale parameter value than a scale parameter value corresponding to the constraint reference value; and

a parameter update module, configured to update at least a part of model parameters of the video encoding and decoding model based on the quantization constraint loss, to obtain a trained video encoding and decoding model.

According to another aspect, this application provides a video encoding method, performed by a computer device, and including:

obtaining a target video frame, extracting a feature map of the target video frame by using a trained video encoding and decoding model, and determining a scale parameter value corresponding to each feature element in the feature map, the video encoding and decoding model being obtained by training by using the video encoding and decoding model processing method according to any one of the above embodiments;

for each feature element in the feature map, obtaining a scale parameter mapping value after mapping the scale parameter value of the feature element to a preset mapping value range according to a preset mapping relationship;

rounding the scale parameter mapping value obtained by mapping according to a rounding boundary value of the scale parameter mapping value to perform quantization, to obtain a scale parameter quantization value of the feature element; and

performing entropy encoding on the feature map according to the scale parameter quantization value of each feature element in the feature map, and determining a transmission data stream according to an encoded data stream obtained by entropy encoding.

According to another aspect, this application further provides a video encoding apparatus. The apparatus includes:

a video frame obtaining module, configured to obtain a target video frame, extract a feature map of the target video frame by using a trained video encoding and decoding model, and determine a scale parameter value corresponding to each feature element in the feature map, the video encoding and decoding model being obtained by training by using the video encoding and decoding model processing apparatus according to any one of the above embodiments;

a value quantization module, configured to: for each feature element in the feature map, obtain a scale parameter mapping value after mapping the scale parameter value of the feature element to a preset mapping value range according to a preset mapping relationship, and round the scale parameter mapping value obtained by mapping according to a rounding boundary value of the scale parameter mapping value to perform quantization, to obtain a scale parameter quantization value of the feature element; and

an entropy encoding module, configured to perform entropy encoding on the feature map according to the scale parameter quantization value of each feature element in the feature map, and determine a transmission data stream according to an encoded data stream obtained by entropy encoding.

According to another aspect, this application provides a video decoding method, performed by a computer device, and including:

obtaining a transmission data stream, and obtaining an encoded data stream from the transmission data stream, the encoded data stream being obtained by encoding a feature map of a target video frame;

determining, by using a trained video encoding and decoding model, a scale parameter value corresponding to each feature element in the feature map, the video encoding and decoding model being obtained by training by using the video encoding and decoding model processing method according to any one of the above embodiments;

for each feature element in the feature map, obtaining a scale parameter mapping value after mapping the scale parameter value of the feature element to a preset mapping value range according to a preset mapping relationship;

rounding the scale parameter mapping value obtained by mapping according to a rounding boundary value of the scale parameter mapping value to perform quantization, to obtain a scale parameter quantization value of the feature element; and

performing entropy decoding on the encoded data stream according to the scale parameter quantization value of each feature element in the feature map, and reconstructing the target video frame based on the feature map restored by the entropy decoding.

According to another aspect, this application further provides a video decoding apparatus. The apparatus includes:

a data stream obtaining module, configured to obtain a transmission data stream, and obtain an encoded data stream from the transmission data stream, the encoded data stream being obtained by encoding a feature map of a target video frame;

a scale parameter prediction module, configured to determine, by using a trained video encoding and decoding model, a scale parameter value corresponding to each feature element in the feature map, the video encoding and decoding model being obtained by training by using the video encoding and decoding model processing apparatus according to any one of the above embodiments;

a value quantization module, configured to obtain a scale parameter mapping value after mapping the scale parameter value of each feature element to a preset mapping value range according to a preset mapping relationship, and round the scale parameter mapping value obtained by mapping according to a rounding boundary value of the scale parameter mapping value to perform quantization, to obtain a scale parameter quantization value of each feature element; and

an entropy decoding module, configured to perform entropy decoding on the encoded data stream according to the scale parameter quantization value of each feature element in the feature map, and reconstruct the target video frame based on the feature map restored by the entropy decoding.

Details of one or more embodiments of this application will be provided in the accompanying drawings and descriptions below. Other features, objectives, and advantages of this application become apparent from the description, the accompanying drawings, and the claims.

BRIEF DESCRIPTION OF THE DRAWINGS

To describe technical solutions in embodiments of this application or a related technology more clearly, the following briefly describes accompanying drawings required for describing some embodiments or the related technology. Apparently, the accompanying drawings in the following descriptions show merely embodiments of this application, and a person of ordinary skill in the art may alternatively obtain other drawings according to the disclosed drawings without creative efforts.

FIG. 1 is a diagram of an application environment of a video encoding and decoding model processing method, a video encoding method, and a video decoding method according to some embodiments.

FIG. 2 is a schematic flowchart of a video encoding and decoding model processing method according to some embodiments.

FIG. 3 is a schematic flowchart of a video encoding and decoding model processing method according to some embodiments.

FIG. 4 is a schematic flowchart of a video encoding method according to some embodiments.

FIG. 5 is a schematic flowchart of a video decoding method according to some embodiments.

FIG. 6 is a schematic flowchart of an overall video encoding and decoding process according to some embodiments.

FIG. 7 is a schematic flowchart of an overall video encoding and decoding process according to some embodiments.

FIG. 8a and FIG. 8b are schematic diagrams of a decoding process failure according to some embodiments.

FIG. 9 is a constraint diagram of an entropy model according to some embodiments.

FIG. 10 is a framework diagram of an encoding and decoding model according to some embodiments.

FIG. 11 is a schematic flowchart of an entropy encoding module according to some embodiments.

FIG. 12 is a schematic diagram of comparison between a video encoding and decoding method and a related technology according to some embodiments.

FIG. 13 is a schematic flowchart of a decoder according to some embodiments.

FIG. 14 is a schematic diagram of a video encoding and decoding method according to some embodiments.

FIG. 15 is a schematic diagram of results of cross-platform scenario verification according to some embodiments.

FIG. 16 is a structural block diagram of a video encoding and decoding model processing apparatus according to some embodiments.

FIG. 17 is a structural block diagram of a video encoding and decoding model processing apparatus according to some embodiments.

FIG. 18 is a structural block diagram of a video encoding apparatus according to some embodiments.

FIG. 19 is a block diagram of a video decoding apparatus according to some embodiments.

FIG. 20 is a diagram of an internal structure of a computer device according to some embodiments.

FIG. 21 is a diagram of an internal structure of a computer device according to some embodiments.

DESCRIPTION OF EMBODIMENTS

Technical solutions in embodiments of this application are clearly and completely described in the following with reference to accompanying the drawings in some embodiments. Apparently, the described embodiments are merely some rather than all embodiments of this application. Based on some embodiments, all other embodiments obtained by those of ordinary skill in the art without creative work fall within the scope of protection of the application.

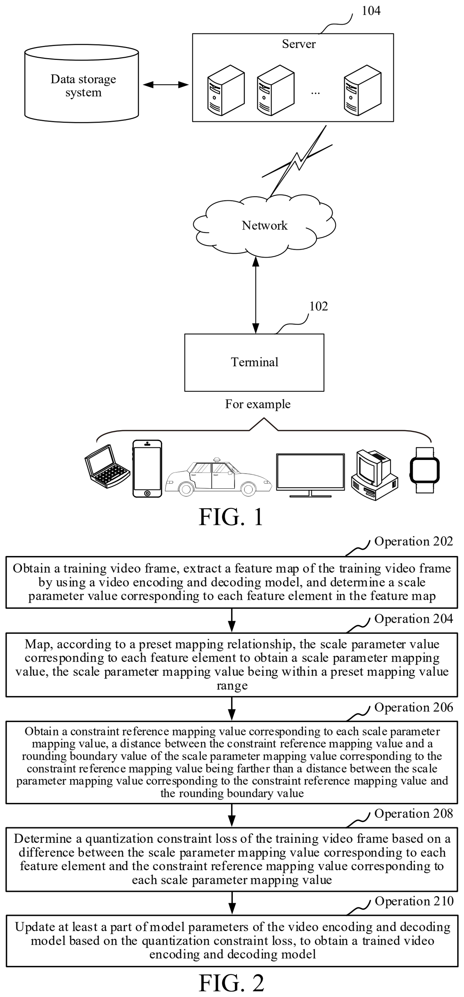

A video encoding and decoding model processing method, a video encoding method, and a video decoding method according to some embodiments may be applied an application environment shown in FIG. 1. A terminal 102 communicates with a server 104 through a network. A data storage system may be separately disposed, may be integrated on the server 104, or may be placed on a cloud or another server. The server 104 may be an independent physical server, or a server cluster or distributed system including a plurality of physical servers, or may be a cloud server providing basic cloud computing services such as a cloud service, a cloud database, cloud computing, a cloud function, cloud storage, a network service, cloud communication, a middleware service, a domain name service, a security service, a content delivery network (CDN), big data, and an artificial intelligence platform. The terminal 102 may be, but is not limited to, various desktop computers, notebook computers, smart phones, tablet computers, Internet of things devices, and portable wearable devices. The Internet of things devices may be smart speakers, smart televisions, smart air conditioners, smart in-vehicle devices, and the like. The terminal or the server may obtain a training video frame, calculate a quantization constraint loss for the training video frame, and further update a model parameter of a video encoding and decoding model based on the quantization constraint loss. After obtaining the trained video encoding and decoding model, the trained video encoding and decoding model may be locally deployed or transmitted to another computer device, whereby the trained video encoding and decoding model may be configured for encoding and decoding a target video frame.

In some embodiments, as shown in FIG. 2, a video encoding and decoding model processing method is provided. The method is performed by a computer device. The computer device may be the server 104 or the terminal 102 in FIG. 1. In the embodiments of the present disclosure including the embodiments of both the claims and the specification (hereinafter referred to as "all embodiments of the present disclosure"), an example in which the method is applied to the server in FIG. 1 is used for description. The method includes the following operations.

Operation 202: Obtain a training video frame, extract a feature map of the training video frame by using a video encoding and decoding model, and determine a scale parameter value corresponding to each feature element in the feature map.

The training video frame may be any type of frame in a training video participating in training, which may be a P frame or an I frame. The I frame is alternatively referred to as a key frame or an intra-coded frame, is a complete image frame, and exists independent of other frames. The P frame is a forward predictive frame, and is generated depending on a previous I frame or P frame. The feature map refers to data obtained by performing feature extraction on to-be-encoded data of the training video frame. The to-be-encoded data is data that may be encoded in a video encoding process. For example, when the training video frame is an I frame, the to-be-encoded data may be the training video frame, and when the training video frame is a P frame, the to-be-encoded data may include motion estimation data of the training video frame, residual compensation data of the training video frame, and the like. The video encoding and decoding model refers to a machine learning model that may be configured for video encoding and video decoding. The video encoding and decoding model includes a feature extraction model, and feature extraction may be performed on to-be-encoded data of a training video frame by using the feature extraction model to obtain the feature map. The feature map includes feature elements, the feature elements refer to pixels of the feature map, and each pixel represents one feature element.

The video encoding and decoding model further includes an entropy model, and the entropy model refers to a model configured for predicting data needed in an entropy encoding process. In all embodiments of the present disclosure, the entropy model may predict a related parameter value of a probability distribution function (i.e., a probability distribution relationship) corresponding to each feature element in the feature map. The probability distribution function corresponding to the feature element refers to a function for describing the probability distribution of the feature element. The probability distribution of the feature element refers to a distribution situation of a probability that the feature element takes a series of possible values relative to these values. In all embodiments of the present disclosure, a probability of a value of the feature element may reflect a probability that the value appears in the feature map. The probability distribution relationship is configured to map a scale parameter mapping value within a preset mapping value range to an expected probability value.

Relevant parameter values of the probability distribution function include a scale parameter value and a position parameter value. The scale parameter is an index that represents a data discrete degree or a variation degree in the probability distribution function, and the scale parameter value is a value of the scale parameter value. The scale parameter may include a standard deviation, a variance, a range, or the like. The scale parameter value determines a shape, for example, a flatness degree, of a description curve of the probability distribution function. A larger scale parameter value indicates a flatter curve of the probability distribution function. On the contrary, a smaller scale parameter value indicates a thin and tall curve of the probability distribution function. A horizontal coordinate of the curve of the probability distribution function is a value of the feature element, and a vertical coordinate is a probability value. Therefore, a larger scale parameter value indicates a higher discrete degree of a probability distribution. In all embodiments of the present disclosure, the probability distribution of the feature element may be Gaussian distribution or Laplace distribution. When the probability distribution of the feature element is the Gaussian distribution, the scale parameter may be a variance or a standard deviation of the probability distribution. The variance of the probability distribution may be an average of a quadratic sum of differences between each probability value and means of all probability values in the probability distribution, and the standard deviation is an arithmetic square root of the variance. The position parameter value is configured for describing a central tendency position of a probability distribution. When the probability distribution of the feature element is the Gaussian distribution, the position parameter may be a mean of the probability distribution of the feature element, or a mathematical expectation.

The video encoding and decoding model in this application may be an end-to-end model, and a structure of the video encoding and decoding model may be implemented by using a known structure of a video encoding and decoding model. The structure of the video encoding and decoding model is not limited in this application.

After obtaining the training video frame, the server inputs the training video frame into the video encoding and decoding model, performs feature extraction on to-be-encoded data of the training video frame by using a feature extraction model in the video encoding and decoding model, to obtain a feature map of the training video frame, and may further predict, by using an entropy model, a probability distribution function of each feature element included in the feature map, to obtain a scale parameter value corresponding to each feature element. In all embodiments of the present disclosure, the position parameter value of each feature element may further be obtained while obtaining the scale parameter value corresponding to each feature element by using the entropy model.

In all embodiments of the present disclosure, for the obtained feature map, the server may further perform hyper-prior encoding, for reducing a feature dimension, on the feature map by using a video encoding and decoding model, to obtain auxiliary encoding information of the feature map. The auxiliary encoding information refers to information for assisting an encoding process, for example, side information. Then, the auxiliary encoding information is input into an entropy model, and a scale parameter value and a position parameter value separately corresponding to each feature element included in the feature map are output by using the entropy model. In all embodiments of the present disclosure, the entropy model may be a variable autoencoder (VAE) model. The entropy model corresponds to a prior represented by a hidden layer of the VAE, and the auxiliary encoding information is configured for assisting entropy model encoding, for example, is a prior of the prior. Therefore, the entropy model encoding is referred to as hyper-prior encoding.

Operation 204: Map, according to a preset mapping relationship, the scale parameter value corresponding to each feature element to obtain a scale parameter mapping value, the scale parameter mapping value being within a preset mapping value range.

The preset mapping relationship is a preset mapping relationship between the scale parameter values and the scale parameter mapping values. Any scale parameter value may be mapped to a scale parameter mapping value according to the preset mapping relationship. The computer device may map each feature element to the preset mapping value range according to the preset mapping relationship of mapping any scale parameter value to one scale parameter mapping value, to obtain a scale parameter mapping value corresponding to each feature element.

In a video encoding and decoding process, a scale parameter value output by the video encoding and decoding model may be further quantized. Quantization herein refers to representing the scale parameter value by using an integer in an integer set. The integer set includes a plurality of integers having continuous values, and a quantity of integers in the integer set is determined by a maximum quantization level. For example, assuming that the maximum quantization level is 32, the integer set includes 32 integers. In a quantization process, the scale parameter value is first mapped into the preset mapping value range according to the preset mapping relationship, to obtain the scale parameter mapping value, and then the scale parameter value is rounded. The rounding mode may be any one of rounding up, rounding down, or rounding to nearest. Rounding up the scale parameter mapping value means taking a nearest rounding boundary value upward. For example, assuming that the scale parameter mapping value is 71.97, a value obtained by rounding up 71.97 may be 72. Rounding down the scale parameter mapping value means taking a nearest rounding boundary value downward. For example, a value obtained by rounding down 71.97 may be 71. Performing rounding to nearest on the scale parameter mapping value means taking a nearest rounding boundary value for the scale parameter mapping value in a rounding off mode. For example, a value obtained by performing rounding to nearest on 71.97 may be 72.

The preset mapping value range is a value range determined by a maximum quantization level. For example, assuming that the maximum quantization level is 32, the preset mapping value range may be set to [0, 31]. A mapping value interval may be determined by every two adjacent integer quantization levels within the preset mapping value range. For example, the mapping value interval may be [0, 1], [1, 2], [2, 3].

The preset mapping relationship refers to a relationship that is preset for implementing value mapping. A value in a larger range may be mapped to a value in another smaller range by using the preset mapping relationship. The preset mapping relationship may be determined by a maximum value, a minimum value, and a maximum quantization level within a value range of the scale parameter mapping value. A value range of the scale parameter mapping value may be set according to an actual requirement after statistical analysis is performed on data output by a pre-trained entropy model.

In all embodiments of the present disclosure, according to the preset mapping relationship between the scale parameter value and the scale parameter mapping value, a distance between the scale parameter mapping value and the minimum value can be calculated, a proportion of the distance to an interval distance within the preset value range is further calculated, and then the proportion is multiplied by maximum quantization level, to obtain the scale parameter mapping value, where the interval distance within the preset value range is a distance between the maximum value and the minimum value.

In all embodiments of the present disclosure, for the preset mapping relationship between the scale parameter value and the scale parameter mapping value, refer to the following formulas (1) and (2). In formula (1), $I$ is a scale parameter mapping value, $\sigma_{max}$ is a maximum value of the scale parameter value, for example, the maximum value may be 64, $\sigma_{step}$ is a quantization step, $\sigma_{min}$ is a minimum value of the scale parameter value, for example, the minimum value 0.11, L is a maximum quantization level, a value of L may be set according to a requirement, for example, L may be 32, and formula (1) may be considered as that: truncated quantization with 0 as a lower bound and L-1 as an upper bound is performed on an input value, to map the scale parameter value to a preset mapping value range of [0, L-1].

$$I = r(\sigma) = \mathrm{clamp}\left(\frac{\log(\sigma) - \log(\sigma_{min})}{\sigma_{\mathrm{step}}}; 0, L-1\right) \ (1)$$

$$\sigma_{step} = \frac{\log(\sigma_{max}) - \log(\sigma_{min})}{L-1} \ (2)$$

The server may obtain the preset mapping relationship between the scale parameter value and the scale parameter mapping value, map each scale parameter value into the preset mapping value range according to the preset mapping relationship, to obtain the scale parameter mapping value corresponding to the scale parameter value corresponding to each feature element.

Operation 206: Obtain a constraint reference mapping value corresponding to each scale parameter mapping value, in which a distance (which may be referred to as a first difference) between the constraint reference mapping value and a rounding boundary value of the scale parameter mapping value corresponding to the constraint reference mapping value is greater than a distance (which may be referred to as a second difference) between the scale parameter mapping value corresponding to the constraint reference mapping value and the rounding boundary value.

Operation 208: Determine a quantization constraint loss of the training video frame based on a difference (which may be referred to as a third difference) between the scale parameter mapping value corresponding to each feature element and the constraint reference mapping value corresponding to each scale parameter mapping value.

Rounding boundary values within the preset mapping value range may be boundaries determining a rounding direction, and values located on two sides of the rounding boundary value may be rounded to different directions during rounding. The preset mapping value range includes a plurality of rounding boundary values. The rounding boundary values divide the preset mapping value range into a plurality of intervals. Values in the same interval have the same rounding result when rounding in the same rounding mode, and values in different intervals have different rounding results when rounding in the same rounding mode. The rounding boundary value is determined by a rounding mode set when the scale parameter mapping value is quantized. In a case that the rounding mode is rounding up or rounding down, the rounding boundary value may be an integer value within the preset mapping value range. In some embodiments, integers spaced apart by a particular distance within the preset mapping value range may be used as the rounding boundary value. For example, assuming that the preset mapping value range is [0, 32], the rounding boundary value may be an odd integer value such as 1, 3, and 7. In some embodiments, each integer value within the preset mapping value range may alternatively be used as the rounding boundary value. In a case that the rounding mode is rounding to nearest, the rounding boundary value may be an average value of two adjacent integer values within the preset mapping value range. In some embodiments, an average value of every two consecutive integer values within the preset mapping value range may be used as the rounding boundary value. For example, each interval midpoint x.5 (x is greater than or equal to 0) within the preset mapping value range is the rounding boundary value. For example, 2.5, 3.5, 4.5, and the like may be used as the rounding boundary value. In some other embodiments, an average value of every two adjacent odd and even integers within the preset mapping value range may be used as the rounding boundary value, for example, 1.5, 3.5, and 5.5.

The distance between the constraint reference mapping value and the rounding boundary value of the scale parameter mapping value corresponding to the constraint mapping reference value is farther than the distance between the scale parameter mapping value corresponding to the constraint mapping reference value and the rounding boundary value. For example, for each scale parameter mapping value, assuming that the scale parameter mapping value is x, the constraint reference mapping value corresponding to the scale parameter mapping value is y, and the rounding boundary value of the scale parameter mapping value is z, a distance between y and z is farther than a distance between x and z.

In all embodiments of the present disclosure, the rounding boundary value of the scale parameter mapping value may be a rounding boundary value adjacent to the scale parameter mapping value. In a case that the rounding mode is rounding up or rounding down, and each integer within the preset mapping value range is a rounding boundary value, the rounding boundary value adjacent to the scale parameter mapping value is an integer nearest to the scale parameter mapping value in a mapping value interval to which the scale parameter mapping value belongs. For example, assuming that the scale parameter mapping value is 72.22, in a mode of rounding up or rounding down, a rounding boundary value adjacent to the scale parameter mapping value in [72, 73] in the mapping value interval to which the scale parameter mapping value belongs is 72. In a case that the rounding mode is rounding to nearest, and a midpoint of each mapping value interval within the preset mapping value range is a rounding boundary value, the rounding boundary value adjacent to the scale parameter mapping value is an interval midpoint of the mapping value interval to which the scale parameter mapping value belongs. Assuming that the scale parameter mapping value is 72.22, in a mode of rounding up or rounding down, a rounding boundary value adjacent to the scale parameter mapping value in [72, 73] in the mapping value interval to which the scale parameter mapping value belongs is 72.5.

A constraint reference mapping value corresponding to a scale parameter mapping value refers to a value for constraining a value of the scale parameter mapping value with reference. The constraint reference mapping value may be a value far away from the rounding boundary value in the mapping value interval to which the scale parameter mapping value belongs. In all embodiments of the present disclosure, if the rounding mode set by a preset quantization mode is rounding up and rounding down, and each integer within the preset mapping value range is a rounding boundary value, the constraint reference mapping value corresponding to the scale parameter mapping value may be an interval midpoint of a mapping value interval to which the scale parameter mapping value belongs. For example, assuming that the scale parameter mapping value is 2.2, the constraint reference mapping value of the scale parameter mapping value in a mapping value interval [2, 3] to which the scale parameter mapping value belongs may be 2.5. If the rounding mode set by the preset quantization mode is rounding to nearest, and an interval midpoint of each mapping value interval is a rounding boundary value, the constraint reference mapping value corresponding to the scale parameter mapping value may be a nearest integer boundary in the mapping value interval to which the scale parameter mapping value belongs. For example, assuming that the scale parameter mapping value is 2.2, in the mode of rounding to nearest, the constraint reference mapping value of the scale parameter mapping value in the mapping value interval [2, 3] to which the scale parameter mapping value belongs is 2, and assuming that the scale parameter mapping value is 2.7, in the mode of rounding to nearest, the constraint reference mapping value of the scale parameter mapping value in the mapping value interval [2, 3] to which the scale parameter mapping value belongs is 3.

The quantization constraint loss of the training video frame is a loss generated in a process of constraining the scale parameter mapping value of each feature element of the training video frame. The constraint herein is to constrain a value of the obtained scale parameter mapping value, whereby the scale parameter mapping value shifts in a direction away from the rounding boundary value. The constraint reference mapping value is farther from the rounding boundary value than the corresponding scale parameter mapping value. For example, the constraint reference mapping value may represent a direction away from the rounding boundary value. The quantization constraint loss is in positive correlation with the difference between the scale parameter mapping value and the corresponding constraint reference mapping value. In a model training process, a video encoding and decoding model may be trained in a direction to which the loss reduces, whereby the difference between the scale parameter mapping value and the constraint reference mapping value reduces. In this way, the scale parameter mapping value output by the video encoding and decoding model can be far from the rounding boundary value as far as possible.

The server may obtain the constraint reference mapping value corresponding to each scale parameter mapping value, determine, based on the difference between the scale parameter mapping value corresponding to each feature element and the constraint reference mapping value corresponding to each scale parameter mapping value, a quantization constraint sub-loss corresponding to each scale parameter mapping value, and collect statistics on the quantization constraint sub-loss corresponding to each scale parameter mapping value, to determine the quantization constraint loss of the training video frame. The statistics may be any one of summation, averaging, or finding a median. The summation may be direct summation or weighted summation. For example, a loss weight corresponding to each quantization constraint sub-loss is determined first, and then multiplication results of each quantization constraint sub-loss and respective loss weight are accumulated.

In all embodiments of the present disclosure, the quantization constraint sub-loss is in positive correlation with the difference between the scale parameter mapping value and the corresponding constraint reference mapping value. For example, after determining the difference between the scale parameter mapping value and the corresponding constraint reference mapping value, the server may determine the difference in various modes capable of ensuring the positive correlation, for example, squaring the difference, multiplying the difference by a preset multiple, reducing the difference by a preset multiple, or adding a constant to the difference.

In some embodiments, the difference between the scale parameter mapping value and the corresponding constraint reference mapping value may be a difference between the scale parameter mapping value and the corresponding constraint reference mapping value. In some other embodiments, the server may calculate function values for the scale parameter mapping value and the corresponding constraint reference mapping value respectively by using the same function, and then calculate a difference between two obtained function values as the difference between the scale parameter mapping value and the corresponding constraint reference mapping value.

In some embodiments, a constraint parameter value may be preset for each mapping value interval within the preset mapping value range. Obtaining, by the server, a constraint reference mapping value corresponding to each scale parameter mapping value may be specifically: determining, for each scale parameter mapping value, a mapping value interval to which the scale parameter mapping value belongs, and using a preset constraint parameter value in the mapping value interval to which the scale parameter mapping value belongs as a constraint parameter value corresponding to the scale parameter mapping value. In some other embodiments, if the difference between the scale parameter mapping value and the corresponding constraint reference mapping value is obtained by calculating a function value difference between the scale parameter mapping value and the corresponding constraint reference mapping value under the same function, and the function has the same value at constraint reference mapping values of mapping value intervals, the server may alternatively use a constraint reference mapping value of any mapping value interval as the constraint reference mapping value corresponding to all scale parameter mapping values, whereby after mapping to obtain the scale parameter mapping value, the server may directly obtain the constraint reference. Because the constraint reference mapping value may be determined without determining the mapping value interval to which the scale parameter mapping value belongs, loss calculation efficiency can be improved, and then training efficiency is improved.

Operation 210: Update at least a part of model parameters of the video encoding and decoding model based on the quantization constraint loss, to obtain a trained video encoding and decoding model.

The at least a part of model parameters refer to a part of model parameters or all model parameters.

In some embodiments, the trained video encoding and decoding model is obtained by initializing a model structure of a preset structural model. After all parameters of the video encoding and decoding model are trained and updated by using the video encoding and decoding model processing method in this application, the video encoding and decoding model has normal encoding and decoding capabilities. In addition, in an encoding and decoding process, the scale parameter mapping value obtained after the scale parameter value output by the model is mapped is a scale parameter value that is offset toward a direction away from an adjacent rounding boundary value. In this case, a bit-rate loss and a reconstruction distortion loss further may be added to the training process. For example, during each training, the server further calculates the bit-rate loss and the reconstruction distortion loss, collects statistics on the bit-rate loss, the reconstruction distortion loss, and the quantization constraint loss to obtain a total loss, and trains the video encoding and decoding model by using the total loss. The bit-rate loss is configured for representing a loss of a bit rate obtained by encoding by using the video encoding and decoding model, and the reconstruction distortion loss is configured for representing a loss of a video frame obtained by model reconstruction.

In some other embodiments, the trained video encoding and decoding model is obtained by pre-training. The pre-trained video encoding and decoding model already has normal encoding and decoding capabilities. The pre-trained video encoding and decoding model is finetuned by using the video encoding and decoding model in all embodiments of the present disclosure, whereby a scale parameter mapping value obtained the scale parameter value output by the video encoding and decoding model is mapped is the scale parameter value that is offset toward a direction away from an adjacent rounding boundary value. The scale parameter mapping value is output by an entropy model of the video encoding and decoding model, whereby in a training process, other model parameters other than a model parameter of the entropy model in the video encoding and decoding model may be frozen, and only the model parameter of the entropy model is updated. In this way, the model may achieve global optimality, and then an optimal sub-space for the quantization constraint loss may be found near an optimal sub-space, which can not only achieve a best constraint effect, but also well maintain original encoding and decoding performance of the video encoding and decoding model. Other model parameters other than the model parameter of the entropy model in the video encoding and decoding model are frozen, for example, in a training process, the other model parameters are remained unchanged, and only the model parameter of the entropy model is updated. In all embodiments of the present disclosure, in this process, the server may directly use the quantization constraint loss as a target loss, or combine the quantization constraint loss with another loss, such as a bit-rate loss or a reconstruction distortion loss, that may be generated in a video encoding and decoding process, to obtain the target loss.

In a training process, the server may determine, based on the quantization constraint loss, a target loss for performing parameter update, and further update the model parameter of the entropy model according to the target loss. After the update is completed, this training is completed. The server may then obtain a next training video frame to continue training. In a process of continuing training, the following operations are repeatedly performed: extracting a feature map of the training video frame by using the video encoding and decoding model, and determining a scale parameter value corresponding to each feature element in the feature map; mapping each feature element to a preset mapping value range according to a preset mapping relationship, to obtain a scale parameter mapping value corresponding to each feature elements; obtaining a constraint reference mapping value corresponding to each scale parameter mapping value; and determining a quantization constraint loss of the training video frame based on a difference between the scale parameter mapping value corresponding to each feature element and the constraint reference mapping value corresponding to each scale parameter mapping value; and updating at least a part of model parameters of the video encoding and decoding model based on the quantization constraint loss. The process of continuing training is an iterative training. For example, in each training process, the video encoding and decoding model with an adjusted parameter is used as a model used in a next training process. When a training process satisfies a training stop condition, the trained video encoding and decoding model is obtained. The training stopping condition may be that the model parameter of the entropy model no longer changes, or that the target loss reaches a minimum value, or that a training count reaches a maximum iteration count, or the like.

In the training process, the model parameter of the video encoding and decoding model is updated to continuously reduce a loss obtained in the training process. For example, in the training process, the model parameter of the video encoding and decoding model is updated in a direction of reducing the loss. Therefore, after determining the target loss updating the model parameter based on the quantization constraint loss, the server may calculate, according to the target loss by using a preset algorithm, an update value of each parameter that may be updated in the video encoding and decoding model, and then replace a current value of the parameter in the model with the calculated update value, to update the model parameter. For example, the preset algorithm may be that a gradient (a derivative) of a parameter is used as a clue, the parameter is updated along a gradient direction. Each time the parameter is updated, a loss obtained in a next training process is reduced, and the preset algorithm is repeated for a plurality of times to gradually approach an optimal parameter. In all embodiments of the present disclosure, the preset algorithm may be any one of a stochastic gradient descent algorithm, an adaptive gradient (Adagrad) algorithm, an improvement of the AdaGrad algorithm (Adadelta), an improvement of the AdaGrad algorithm (RMSprop), an adaptive moment estimation (Adam) algorithm, and the like.

According to the foregoing video encoding and decoding model processing method, because the constraint reference mapping value is farther from the rounding boundary value than the corresponding scale parameter mapping value, the quantization constraint loss determined based on the difference between the scale parameter mapping value and the corresponding constraint reference mapping value may reflect how far the scale parameter mapping value is from the rounding boundary value. When parameter update is performed on the video encoding and decoding model based on the quantization constraint loss, the scale parameter mapping value corresponding to the scale parameter value output by the video encoding and decoding model may be constrained, and then the scale parameter value output by the video encoding and decoding model is indirectly constrained, whereby the scale parameter value output by the video encoding and decoding model shifts in a direction away from the rounding boundary value after being mapped, for example, a probability that the scale parameter mapping value approaches the rounding boundary value decreases, and a problem that quantization results obtained in an encoding process and a decoding process are inconsistent in a cross-platform encoding and decoding scenario is alleviated. Therefore, accuracy of a video frame obtained by reconstructing in the decoding process can be improved.

In all embodiments of the present disclosure, determining the quantization constraint loss of the training video frame based on the difference between the scale parameter mapping value corresponding to each feature element and the constraint reference mapping value corresponding to each scale parameter mapping value includes: determining a quantization constraint sub-loss corresponding to each scale parameter mapping value based on the difference between the scale parameter mapping value corresponding to each feature element and the constraint reference mapping value corresponding to each scale parameter mapping value; determining a loss weight corresponding to each scale parameter mapping value; and determining the quantization constraint loss of the training video frame based on the quantization constraint sub-loss and the loss weight respectively corresponding to each scale parameter mapping value.

A loss weight indicates importance of the quantization constraint sub-loss to the quantization constraint loss of the training video frame. A larger loss weight indicates greater importance of the quantization constraint sub-loss to the quantization constraint loss of the training video frame. Considering that the video encoding and decoding model is trained to constrain the scale parameter value output by the video encoding and decoding model, whereby the scale parameter mapping value obtained after the scale parameter value output by the video encoding and decoding model is mapped is away from a rounding boundary value as far as possible, an attribute of the scale parameter mapping value may determine the importance of the quantization constraint sub-loss of the scale parameter mapping value for the quantization constraint loss of the training video frame. In all embodiments of the present disclosure, the attribute of the scale parameter mapping value may be a value attribute, for example, a value, or a position attribute, for example, a position of the scale parameter mapping value within a preset mapping value range. For example, if a scale parameter mapping value is relatively close to a rounding boundary value within the preset mapping value range, a quantization constraint sub-loss of the scale parameter mapping value is relatively important to the quantization constraint loss of the training video frame, and a relatively large loss weight may be determined for the scale parameter value. However, if a scale parameter mapping value is relatively far from each constraint reference mapping value within the preset mapping value range, a quantization constraint sub-loss of the scale parameter mapping value is relatively less important, and a relatively small loss weight may be determined for the scale parameter value.

The server may determine, based on the difference between the scale parameter mapping value corresponding to each feature element and the constraint reference mapping value corresponding to each scale parameter mapping value, a quantization constraint sub-loss corresponding to each scale parameter mapping value, determine a loss weight corresponding to each scale parameter mapping value, multiply the quantization constraint sub-loss and the loss weight separately corresponding to each scale parameter mapping value, and then add results obtained by multiplication, to obtain the quantization constraint loss of the training video frame.

In all embodiments of the present disclosure, the server may determine, according to a distance between a scale parameter mapping value and a rounding boundary value within a mapping value interval to which the scale parameter mapping value belongs, a loss weight corresponding to the scale parameter mapping value. In all embodiments of the present disclosure, the distance between the scale parameter mapping value and the rounding boundary value within the mapping value interval to which the scale parameter mapping value belongs may be in negative correlation with the loss weight. For example, a larger distance indicates a smaller loss weight, and a smaller distance indicates a larger loss weight. The negative correlation herein indicates that the distance and the loss weight change in different directions, but does not indicate that the loss weight certainly may change when the distance changes. For example, it may be set that when the distance is less than a first distance, the loss weight is a first value; when the distance is greater than the first distance and less than a second distance, the loss weight is a second value; and when the distance is greater than the second distance, the loss weight is a third value. The first distance and the second distance are different, and may be set according to a requirement. For example, the first distance may be 0.1, and the second distance may be 0.3. The first value is greater than the second value, and the second value is greater than the third value. The first value, the second value, and the third value may be set according to a requirement. For example, the first value may be 1, the second value may be 0.6, and the third value may be 0.2.

In all embodiments of the present disclosure, the loss weight is determined for each scale parameter mapping value, and the loss weight may reflect importance of the scale parameter mapping value. Therefore, a more accurate quantization constraint loss may be obtained based on the loss weight and the quantization constraint sub-loss of each scale parameter mapping value.

In all embodiments of the present disclosure, determining the loss weight corresponding to each scale parameter mapping value includes: determining an attribution relationship between each scale parameter mapping value and a preset value interval; determining a loss weight corresponding to each scale parameter mapping value according to the attribution relationship between each scale parameter mapping value and the preset value interval; and determining a quantization constraint loss of the training video frame based on a quantization constraint sub-loss and the loss weight separately corresponding to each scale parameter mapping value.

In all embodiments of the present disclosure, an attribute of the scale parameter mapping value may be the attribution relationship between the scale parameter mapping value and the preset value interval. A scale parameter mapping value belonging to the preset value interval and a scale parameter mapping value obtained after a feature element corresponding to the scale parameter mapping value is encoded and then decoded have a consistent rounding result. The rounding result herein refers to an integer value finally obtained in a preset quantization mode, for example, a scale parameter quantization value corresponding to the scale parameter mapping value.

The attribution relationship between the scale parameter mapping value and the preset value interval includes attribution and non-attribution. When a scale parameter mapping value belongs to the preset value interval, it indicates that a scale parameter quantization value obtained by the feature element corresponding to the scale parameter mapping value in a decoding process does not jump. When a scale parameter mapping value does not belong to the preset value interval, it indicates that a scale parameter quantization value obtained by the feature element corresponding to the scale parameter mapping value in the decoding process may jump. Jump may lead to inconsistent rounding results on a decoder, and then a decoding failure phenomenon occurs in the decoding process. The jump herein means that in a cross-platform video encoding and video decoding process, for the same feature element, a scale parameter mapping value obtained in the decoding process crosses a rounding boundary value relative to a scale parameter mapping value obtained in the encoding process. For example, assuming that for a feature element $y_1$ in a feature map, the encoding process is performed by a first device. The scale parameter value output by the video encoding and decoding model in the encoding process is 0.115629, and the scale parameter mapping value obtained after the scale parameter value is mapped is 1.9998. The decoding process is performed by a second device. The scale parameter value output by the video encoding and decoding model in the decoding process is 0.115628, and the scale parameter mapping value obtained after the scale parameter value is mapped is 2.0001. It can be learned that the scale parameter mapping value obtained in the decoding process jumps at the rounding boundary value 2. In this case, when the rounding mode set by the preset quantization mode is rounding down, and when the first device performs encoding, an obtained rounding result is 1; and when the second device performs decoding, an obtained rounding result is 2, whereby a decoding error occurs at the feature element when a decoder decodes and reconstructs.

To avoid occurrence of such a jump phenomenon as much as possible, the loss weight of the scale parameter mapping value corresponding to the feature element that jumps is relatively important for a training process, and is a loss that may be especially concerned about in the training process. Therefore, the loss weight corresponding to the scale parameter mapping value may be determined according to the attribution relationship between the scale parameter mapping value and the preset value interval, further the quantization constraint sub-loss and the loss weight separately corresponding to each scale parameter mapping value may be multiplied, and then results obtained by multiplication are added, whereby the quantization constraint loss of the training video frame can be obtained.

In all embodiments of the present disclosure, determining the loss weight corresponding to each scale parameter mapping value according to the attribution relationship between each scale parameter mapping value and the preset value interval includes: determining a loss weight corresponding to a scale parameter mapping value belonging to the preset value interval as a first weight; and determining a loss weight corresponding to a scale parameter mapping value not belonging to the preset value interval as a second weight, the second weight being greater than the first weight.

The server may determine scale parameter mapping values of feature elements in a feature map of a training video frame, determine, when a scale parameter mapping value of a feature element belongs to the preset value interval, a loss weight corresponding to the scale parameter mapping value of the feature element as a first weight, and determine, when a scale parameter mapping value of a feature element does not belong to the preset value interval, a loss weight corresponding to the scale parameter mapping value of the feature element as a second weight. Values of the first weight and the second weight may be determined according to a requirement, as long as ensuring that the second weight is greater than the first weight, for example, the second weight may be set to 1, and the first weight may be set 0.

In all embodiments of the present disclosure, a distance between the scale parameter mapping value belonging to the preset value interval and the corresponding constraint reference mapping value is less than a preset threshold.

The distance between the scale parameter mapping value and the corresponding constraint reference mapping value being less than the preset threshold may be understood as that the scale parameter mapping value approaches the constraint reference mapping value within the mapping value interval to which the scale parameter mapping value belongs. When the scale parameter mapping value approaches the constraint reference mapping value, the corresponding feature element does not jump during decoding. Therefore, it may be set that the distance between the scale parameter mapping value belonging to the preset value interval and the corresponding constraint reference mapping value is less than the preset threshold.

In all embodiments of the present disclosure, when a rounding mode set by the preset quantization mode is rounding up or rounding down, and the constraint reference mapping value may be an interval midpoint of the mapping value interval, the preset value interval may include that: a distance between the scale parameter mapping value belonging to the preset value interval and the interval midpoint of the mapping value range to which the scale parameter mapping value belongs is less than a preset threshold. Using an example in which the rounding mode set by the preset quantization mode is rounding up, the scale parameter mapping value belonging to the preset value interval satisfies:

$|x - (\lceil x \rceil - 0.5)| < \eta$ , where $x$ represents a scale parameter mapping value, $\eta$ is a preset threshold, and a value of $\eta$ may be set according to a requirement, for example, may be 0.3.

In all embodiments of the present disclosure, a distance between the scale parameter mapping value belonging to the preset value interval and a lower limit of the preset mapping value range is less than a preset threshold.

The lower limit of the preset mapping value range is a minimum quantization level. For example, assuming that the preset mapping value range is [0, 31], the lower limit of the preset mapping value range is 0. The distance between the scale parameter mapping value and the corresponding constraint reference mapping value being less than the preset threshold may be understood as that the scale parameter mapping value approaches the lower limit of the preset mapping value range within the preset mapping value range. When the scale parameter mapping value approaches the lower limit of the preset mapping value range, the corresponding feature element does not jump during decoding. Therefore, it may be set that the distance between the scale parameter mapping value belonging to the preset value interval and the lower limit of the preset mapping value range is less than the preset threshold.

Using an example in which the lower limit value of the preset mapping value range is 0, the scale parameter mapping value belonging to the preset value interval satisfies the following condition: $x < \eta$, where $x$ represents a scale parameter mapping value.

In all embodiments of the present disclosure, the preset value interval is set, and the loss weight can be quickly determined according to the attribution relationship between the scale parameter mapping value and the preset value interval, whereby loss calculation efficiency is improved, and then training efficiency can be improved.

In all embodiments of the present disclosure, determining the quantization constraint loss of the training video frame based on the difference between the scale parameter mapping value corresponding to each feature element and the constraint reference mapping value corresponding to each scale parameter mapping value includes: obtaining a preset probability distribution function; determining, by using the probability distribution function, an expected probability value of each scale parameter mapping value and an expected probability value of the constraint reference mapping value corresponding to each scale parameter mapping value; determining, based on a difference between the expected probability value of each scale parameter mapping value and the expected probability value of the corresponding constraint reference mapping value, a quantization constraint sub-loss corresponding to each scale parameter mapping value; and determining the quantization constraint loss of the training video frame according to the quantization constraint sub-loss corresponding to each scale parameter mapping value.

The probability distribution function is configured for inputting a scale parameter mapping value within a preset mapping value range, and outputting an expected probability value of the input scale parameter mapping value. In all embodiments of the present disclosure, within a range from the constraint reference mapping value to a nearest rounding boundary value of the constraint reference mapping value within the preset mapping value range, a closer distance between the scale parameter mapping value input into the probability distribution function and the constraint reference mapping value indicates a larger expected probability value output by the probability distribution function. For example, the expected probability value gradually decreases from the constraint reference mapping value to the rounding boundary value. For example, the expected probability value output by the probability distribution function gradually decreases as the distance between the input scale reference mapping value and the constraint reference mapping value increases. Herein, the expected probability value of the scale parameter mapping value is an expected appearance probability of the scale parameter mapping value in the training process. For example, in the training process of this application, the scale parameter mapping value is expected to be distributed in a direction that approaches the constraint reference mapping value.

In all embodiments of the present disclosure, when the rounding mode of the preset quantization mode is rounding up or rounding down, and the constraint reference mapping value of each mapping value interval is the interval midpoint, a maximum value of the expected probability value of each mapping value interval may be obtained at the interval midpoint, and the expected probability value monotonically decreases from the interval midpoint to an integer boundary of the mapping value interval. In all embodiments of the present disclosure, the preset probability distribution function may be Gaussian distribution or Laplace distribution. Using the Gaussian distribution as an example, the preset probability distribution function within the entire preset mapping value range may be represented by using a piecewise Gaussian function shown in the following formula (3):

$$G(x, \delta) = \frac{1}{\delta\sqrt{2\pi}} e^{-\frac{1}{2}\left(\frac{x - (\lceil x \rceil - 0.5)}{\delta}\right)^2} \quad (3)$$

where $x$ represents a value on which probability calculation may be performed. For example, if an expected probability value may be calculated for a scale parameter mapping value, $x$ is the scale parameter mapping value. If an expected probability value may be calculated for a value at the interval midpoint, $x$ is an interval midpoint value, and $\lceil x \rceil - 0.5$ represents an interval midpoint of a mapping value interval to which the scale parameter mapping value belongs, for example, the probability distribution described by the piecewise Gaussian function is the same in each mapping value interval, and is represented as a Gaussian distribution using the interval midpoint as a mean in each mapping value interval. $\delta$ is a standard deviation of the Gaussian distribution, and the value of $\delta$ may be 1.

Considering that distributions of the foregoing piecewise Gaussian function in all mapping value intervals are the same, probabilities at the interval midpoints of all mapping value intervals are the same. Therefore, a probability value $G(0.5, \delta)$ at the interval midpoint within the interval [0, 1] represents a probability value of an interval midpoint of all mapping value intervals, and the quantization constraint loss may be calculated by using the following formula (4):

$$\mathcal{L}_{cal} = \sum_{i=1}^{C \times H \times W} M(I_i) \cdot \left(G(0.5, \delta) - G(I_i, \delta)\right)^2 \quad (4)$$

where $G(0.5, \delta)$ is an expected probability value at the interval midpoint, $G(I_i, \delta)$ is an expected probability value of a scale parameter mapping value corresponding to an $i^{th}$ feature element in the feature map, H and W respectively represent a height and a width of the feature map, C represents a quantity of channels, and $\mathcal{L}_{cal}$ represents a quantization constraint loss. M($\boldsymbol{l_i}$) represents a loss weight of the scale parameter mapping value corresponding to the i$^{th}$ feature element. In all embodiments of the present disclosure, M($\boldsymbol{l_i}$) may be a binary function of the following formula (5):

$$\mathrm{M}(x) = \begin{cases} 0, & x < \eta \text{ or } |x - (\lceil x \rceil - 0.5)| < \eta \\ 1, & \text{other situation} \end{cases} \quad (5)$$

For example, when $\boldsymbol{l}$ value is within a range far away from an integer boundary in the mapping value interval, $\boldsymbol{l}$ may be unconstrained; and when the $\boldsymbol{l}$ approaches the boundary of the mapping value interval, the Gaussian constraint shown above is applied. In addition, when the $\boldsymbol{l}$ approaches 0, the $\boldsymbol{l}$ does not need to be constrained. A truncation with a minimum of 0 may be performed on $\boldsymbol{l}$ in a process of obtaining $\boldsymbol{l}$, so the $\boldsymbol{l}$ value does not jump near 0.

In all embodiments of the present disclosure, the expected probability value of each scale parameter mapping value in the expected probability distribution within the preset mapping value range is determined, and the quantization constraint sub-loss corresponding to each scale parameter mapping value is determined based on the difference between the expected probability value of each scale parameter mapping value and a first reference probability value of the corresponding constraint reference mapping value, to obtain a more accurate quantization constraint sub-loss, whereby performance of a trained entropy model is better.

In all embodiments of the present disclosure, determining the quantization constraint loss of the training video frame based on the difference between the scale parameter mapping value corresponding to each feature element and the constraint reference mapping value corresponding to each scale parameter mapping value includes: determining a difference between each scale parameter mapping value and the corresponding constraint reference mapping value; determining, according to the difference between each scale parameter mapping value and the corresponding constraint reference mapping value, a quantization constraint sub-loss corresponding to each scale parameter mapping value; and determining the quantization constraint loss of the training video frame according to the quantization constraint sub-loss corresponding to each scale parameter mapping value.

In all embodiments of the present disclosure, the server may calculate a mean square error (MSE). For example, after calculating the difference between each scale parameter mapping value and the corresponding constraint reference mapping value is calculated, the server calculates a square of the difference, calculates an average value of squares of all differences, to obtain the quantization constraint sub-loss corresponding to each scale parameter mapping value, and then calculates an average value of all quantization constraint sub-losses, to obtain the quantization constraint loss of the training video frame.

In all embodiments of the present disclosure, the quantization constraint sub-loss corresponding to each scale parameter mapping value is determined according to the difference between each scale parameter mapping value and the corresponding constraint reference mapping value, whereby the quantization constraint loss of the training video frame can be quickly determined, and then training efficiency is improved.

In all embodiments of the present disclosure, at least a part of model parameters of the video encoding and decoding model are updated based on a quantization constraint loss, a bit-rate loss, and a reconstruction distortion loss. The bit-rate loss and the reconstruction distortion loss are calculated by using a loss calculation operation, and the loss calculation operation includes: determining a probability value of each feature element according to a scale parameter value and a position parameter value of a probability distribution of each feature element, the position parameter value of each feature element being obtained by predicting the probability distribution of each feature element; determining a probability value of the training video frame according to the probability value of each feature element, and performing a cross-entropy calculation on the probability value of the training video frame, to obtain the bit-rate loss; and determining a reconstructed video frame of the training video frame, and determining the reconstruction distortion loss according to a difference between the training video frame and the reconstructed video frame of the training video frame.

The probability distribution q predicted by an entropy model is shown in the following formula:

$$q(y^t \mid \hat{z}^t, c) = \prod_i \left( \mathcal{N}(\mu_i, \sigma_i^2) * \mathcal{U}\left(-\frac{1}{2}, \frac{1}{2}\right) \right)(y_i^t) \quad (6)$$
$$(\mu, \sigma) = \mathrm{Etp}(\hat{z}^t, c),$$

where Etp represents the entropy model, $\hat{z}^t$ is a hyper-prior of a t-frame video frame, and c is a conditional input of the entropy model (when the t-frame video frame is an I frame, there is no c as a condition; and when the t-frame video frame is a p frame, reference information c of a previous frame may be input into the entropy model as a condition), $(\mu, \sigma)$ represents a parameter value of the probability distribution predicted by the entropy model, $\mathcal{N}$ represents normal distribution, and $\mathcal{U}$

represents uniform distribution with a width of 1.

Therefore, the bit-rate loss may be calculated by using the following formula (7):

$$R(p,q) = \mathbb{E}_{y^t \sim p}[-\log_2 q(y^t \mid \hat{z}^t, c)] \quad (7)$$

where $p$ represents an actual probability distribution of a feature map of the t-frame video frame, and $\mathbb{E}_{y^t \sim p}$ is a function for calculating a cross entropy.

The reconstruction distortion loss is determined according to a difference between the reconstructed video frame obtained by reconstructing the training video frame by using a video encoding and decoding model and the training video frame. In all embodiments of the present disclosure, the server may calculate the reconstruction distortion loss with reference to the following formulas (8) and (9), where $x$ represents an original frame, $\hat{x}$ represents a reconstructed frame of the original frame, H and W respectively represent a height and a width of a video frame, and C represents a quantity of channels:

$$D(x, \hat{x}) = mse(x, \hat{x}) \quad (8)$$

$$mse = \frac{1}{C \times H \times W} \sum_{c=1}^{C} \sum_{i=1}^{H} \sum_{j=1}^{W} (x_{c,i,j} - \hat{x}_{c,i,j})^2 \quad (9)$$

After the reconstruction distortion loss and the bit-rate loss are obtained, a loss $\mathcal{L}_{gen}$ may be obtained by collecting statistics on these two losses by using the following formula (10):

$$\mathcal{L}_{gen} = \lambda \cdot D + R \quad (10)$$

where $D$ represents a reconstruction distortion loss (Distortion) between a reconstructed frame and an original frame of a video, and $\lambda$ is a weight for adjusting trade-off between reconstruction quality and a transmission byte bit-rate.

Further, the server may calculate a final target loss by using a loss $\mathcal{L}_{gen}$ obtained by collecting statistics on the reconstruction distortion loss and the bit-rate loss and the quantization constraint loss $\mathcal{L}_{cal}$ together with reference to the following formula (11), where $\beta$ is configured for adjusting a constraint strength applied to an output $I$, the $\beta$ may be set according to a requirement, for example, may be set to 1.0.

$$\mathcal{L} = \mathcal{L}_{gen} + \beta \cdot \mathcal{L}_{cal} \quad (11)$$

Then, the server may update at least a part of model parameters of the video encoding and decoding model according to the target loss.

In all embodiments of the present disclosure, in a process of training the entropy model, the bit-rate loss and the reconstruction distortion loss are further combined, whereby the video encoding and decoding model including the trained entropy model can maintain original performance as much as possible, and an output value of the entropy model can shift in a direction away from the rounding boundary value after being mapped.

According to the video encoding and decoding model processing method provided in all embodiments of the present disclosure, a scale parameter mapping value obtained by mapping a scale parameter value output by a video encoding and decoding model to a preset mapping value range is constrained, to indirectly constrain the scale parameter value output by the video encoding and decoding model, whereby the output scale parameter value is constrained to a direction away from a rounding boundary value. In all embodiments of the present disclosure, this application further provides another video encoding and decoding model processing method. In the video encoding and decoding model processing method, the scale parameter value output by the video encoding and decoding model is directly constrained, to achieve an objective the same as that in the foregoing embodiments. The process of constraining the scale parameter value output by the video encoding and decoding model is similar to previous text. Therefore, for explanations of some operations in the following embodiments, refer to the descriptions in the foregoing embodiments.

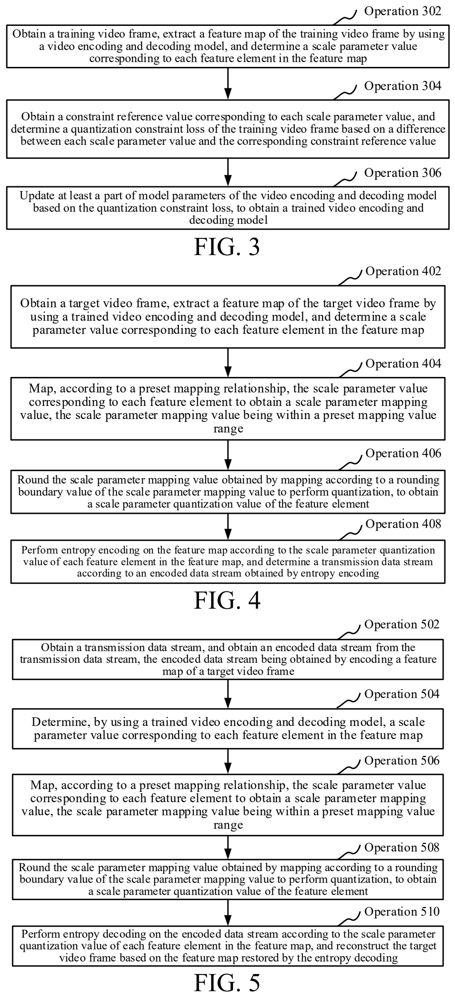

In all embodiments of the present disclosure, another video encoding and decoding model processing method is provided. The method is performed by a computer device. The computer device may be the server 104 or the terminal 102 in FIG. 1. As shown in FIG. 3, in all embodiments of the present disclosure, an example in which the method is applied to the server in FIG. 1 is used for description. The method includes the following operations.

Operation 302: Obtain a training video frame, extract a feature map of the training video frame by using a video encoding and decoding model, and determine a scale parameter value corresponding to each feature element in the feature map.

Operation 304: Obtain a constraint reference value corresponding to each scale parameter value, and determine a quantization constraint loss of the training video frame based on a difference between each scale parameter value and the corresponding constraint reference value,

after being mapped to a preset mapping value range according to a preset mapping relationship, the constraint reference value being farther from a rounding boundary value of a scale parameter mapping value obtained by mapping the corresponding scale parameter value than the scale parameter value corresponding to the constraint reference value.

For example, a distance between the value obtained by mapping the constraint reference value to the preset mapping value range according to the preset mapping relationship and the rounding boundary value of the scale parameter mapping value obtained by mapping the scale parameter value corresponding to the constraint reference value is farther than a distance between the value obtained by mapping the scale parameter value corresponding to the constraint reference value to the preset mapping value range according to the preset mapping relationship and the rounding boundary value of the scale parameter mapping value obtained by mapping the scale parameter value corresponding to the constraint reference value.

In all embodiments of the present disclosure, each scale parameter value and the corresponding constraint reference value belong to the same scale parameter value interval. The constraint reference value is farther from a rounding reference point that is in the scale parameter value interval and that is adjacent to the corresponding scale parameter value than the corresponding scale parameter value. Two boundary values of the scale parameter value interval can be mapped to two adjacent integer quantization levels in a preset quantization mode. The rounding reference point can be mapped to rounding boundary values of the two adjacent integer quantization levels in the preset quantization mode. Rounding boundary values of adjacent integer quantization levels are rounding boundary values in a mapping value interval determined by two adjacent integer quantization levels. Using an example in which the rounding mode set in the preset quantization mode is rounding up, if a scale parameter value x1 can be mapped to 2 in the preset quantization mode, and another scale parameter value x2 can be mapped to 3 in the preset quantization mode, the two scale parameter values can be used as two boundary values to determine a scale parameter value interval [x1, x2]. Because rounding boundary values in the mapping value interval [2, 3] are 2 and 3, x1 and x2 in the scale parameter value interval [x1, x2] are rounding reference points of the interval.

The constraint reference value corresponding to the scale parameter value is used as a reference to constrain a value of the scale parameter value. The constraint reference value is farther from a rounding reference point that is in the mapping value interval and that is adjacent to the corresponding scale parameter value than the corresponding scale parameter value. Therefore, when the scale parameter value is constrained by using the constraint reference value as a reference, the scale parameter value tends to a direction away from the rounding reference point. The constraint reference value may be a value point that has a relatively low probability of jumping after being mapped to the preset mapping value range. In all embodiments of the present disclosure, if the rounding mode set by the preset quantization mode is rounding up and rounding down, a constraint reference value corresponding to a scale parameter value may be an interval midpoint of a scale parameter value interval to which the scale parameter value belongs, or may be a value that can be mapped to an interval midpoint of a corresponding mapping value interval in the scale parameter value interval to which the scale parameter value belongs. For example, assuming that a scale parameter value x0 in the foregoing scale parameter value interval [x1, x2] can be mapped to an interval midpoint 2.5 in a corresponding mapping value interval [2, 3], x0 is a constraint reference value in the scale parameter value interval [x1, x2]. If the rounding mode set by the preset quantization mode is nearest rounding, the constraint reference value may be a nearest boundary value in the scale parameter value interval to which the scale parameter value belongs.

The server may determine a constraint reference value corresponding to each scale parameter value, determine a quantization constraint sub-loss corresponding to each scale parameter value based on a difference between each scale parameter value and the corresponding constraint reference value, and collect statistics on the quantization constraint sub-loss corresponding to each scale parameter value, to determine the quantization constraint loss of the training video frame. The quantization constraint sub-loss may be in positive correlation with the difference between the scale parameter value and the corresponding constraint reference value.

Operation 306: Update at least a part of model parameters of the video encoding and decoding model based on the quantization constraint loss, to obtain a trained video encoding and decoding model.

In some embodiments, the trained video encoding and decoding model is obtained by initializing a model structure of a preset structural model. All parameters of the video encoding and decoding model are trained and updated by using the video encoding and decoding model processing method of this application. In some other embodiments, the trained video encoding and decoding model is obtained by pre-training, and the pre-trained video encoding and decoding model already has normal encoding and decoding capabilities. The pre-trained video encoding and decoding model is finetuned by using the video encoding and decoding model in all embodiments of the present disclosure. In a training process, only a model parameter of the entropy model may be updated, and a remaining model parameter in the video encoding and decoding model is frozen.

According to the foregoing video encoding and decoding model processing method, because the constraint reference value is farther from the rounding boundary value than the corresponding scale parameter value after being mapped to a preset mapping value range according to a preset mapping relationship, the quantization constraint loss determined based on the difference between the scale parameter value and the corresponding constraint reference value may reflect how far the scale parameter mapping value is from the rounding boundary value, and the scale parameter value output by the video encoding and decoding model may be constrained when parameter update is performed on the video encoding and decoding model based on the quantization constraint loss, whereby the scale parameter value output by the video encoding and decoding model shifts in a direction away from the rounding boundary value, for example, a probability that the scale parameter mapping value approaches the rounding boundary value decreases, and a problem that quantization results obtained in an encoding process and a decoding process in a cross-platform encoding and decoding scenario are inconsistent is alleviated. Therefore, accuracy of a video frame obtained by reconstructing in the decoding process can be improved. In addition, because the quantization constraint loss directly acts on the scale parameter value, a value directly output by the video encoding and decoding model may be constrained. Another additional mapping operation does not need to be performed in the training process, and training efficiency is relatively high.

In all embodiments of the present disclosure, determining the quantization constraint loss of the training video frame based on the difference between each scale parameter value and the corresponding constraint reference value includes: determining, based on the difference between each scale parameter value and the corresponding constraint reference value, a quantization constraint sub-loss corresponding to each scale parameter value; determining a loss weight corresponding to each scale parameter value; and determining a quantization constraint loss of the training video frame based on the quantization constraint sub-loss and the loss weight separately corresponding to each scale parameter value.

In all embodiments of the present disclosure, determining the loss weight corresponding to each scale parameter value includes: determining an attribution relationship between each scale parameter value and a preset value interval, a scale parameter value belonging to the preset value interval and a scale parameter value obtained after a feature element corresponding to the scale parameter value is encoded and then decoded having a consistent quantization result; determining the loss weight corresponding to each scale parameter mapping value according to the attribution relationship between each scale parameter value and the preset value interval; and determining a quantization constraint loss of the training video frame based on the quantization constraint sub-loss and the loss weight separately corresponding to each scale parameter value. The quantization result herein refers to an integer value finally obtained in a preset quantization mode, for example, a scale parameter quantization value corresponding to the scale parameter value.

In all embodiments of the present disclosure, determining the loss weight corresponding to each scale parameter value according to the attribution relationship between each scale parameter value and the preset value interval includes: determining a loss weight corresponding to a scale parameter value belonging to the preset value interval as a first weight; and determining a loss weight corresponding to a scale parameter value not belonging to the preset value interval as a second weight, the second weight being greater than the first weight.

In all embodiments of the present disclosure, a distance between the scale parameter value belonging to the preset value interval and the corresponding constraint reference value is less than a preset threshold.

In all embodiments of the present disclosure, a distance between the scale parameter value belonging to the preset value interval and a lower limit of the scale parameter value range is less than a preset threshold.

In all embodiments of the present disclosure, determining the quantization constraint loss of the training video frame based on the difference between each scale parameter value and the corresponding constraint reference value includes: obtaining a preset probability distribution function, the probability distribution function being configured for inputting the scale parameter value, and outputting an expected probability value of the input scale parameter value; determining, by using the probability distribution function, an expected probability value of each scale parameter value and an expected probability value of the constraint reference value corresponding to each scale parameter value; determining, based on a difference between the expected probability value of each scale parameter value and the expected probability value of the corresponding constraint reference value, a quantization constraint sub-loss corresponding to each scale parameter value; and determining the quantization constraint loss of the training video frame according to the quantization constraint sub-loss corresponding to each scale parameter value.

In a domain of the scale parameter value, within a range from the constraint reference value to the scale parameter value that is nearest the constraint reference value and that is configured for mapping to a rounding boundary value, a closer distance between the scale parameter value input into the probability distribution function and the constraint reference value indicates a larger expected probability value output by the probability distribution function.

In all embodiments of the present disclosure, determining the quantization constraint loss of the training video frame based on the difference between each scale parameter value and the corresponding constraint reference value includes: determining a difference between each scale parameter value and the corresponding constraint reference value;

determining, according to the difference between each scale parameter value and the corresponding constraint reference value, a quantization constraint sub-loss corresponding to each scale parameter value; and determining the quantization constraint loss of the training video frame according to the quantization constraint sub-loss corresponding to each scale parameter value.

In all embodiments of the present disclosure, a model parameter of an entropy model is updated based on a quantization constraint loss, a bit-rate loss, and a reconstruction distortion loss. The bit-rate loss and the reconstruction distortion loss are calculated by using a loss calculation operation, and the loss calculation operation includes: determining a probability value of each feature element according to a scale parameter value and a position parameter value of a probability distribution of each feature element, the position parameter value of each feature element being obtained by predicting the probability distribution of each feature element; determining a probability value of the training video frame according to the probability value of each feature element, and performing a cross-entropy calculation on the probability value of the training video frame, to obtain the bit-rate loss; and determining a reconstructed video frame of the training video frame, and determining the reconstruction distortion loss according to a difference between the training video frame and the reconstructed video frame of the training video frame.

In all embodiments of the present disclosure, as shown in FIG. 4, a video encoding method is provided. The method is performed by an encoder. The encoder may be the server 104 or the terminal 102 in FIG. 1. In all embodiments of the present disclosure, an example in which the method is applied to the server in FIG. 1 is used for description. The method includes the following operations.

Operation 402: Obtain a target video frame, extract a feature map of the target video frame by using a trained video encoding and decoding model, and determine a scale parameter value corresponding to each feature element in the feature map.

The video encoding and decoding model is trained, and after an output scale parameter value is mapped according to a preset mapping relationship, an obtained scale parameter mapping value is offset toward a direction away from an adjacent rounding boundary value.

The trained video encoding and decoding model may be trained by the encoding and decoding model processing method provided in any one of the foregoing embodiments. For a training process, refer to the foregoing embodiments.

Operation 404: Map, according to a preset mapping relationship, the scale parameter value corresponding to each feature element to obtain a scale parameter mapping value, the scale parameter mapping value being within a preset mapping value range.

Operation 406: Round the scale parameter mapping value obtained by mapping according to a rounding boundary value of the scale parameter mapping value to perform quantization, to obtain a scale parameter quantization value of the feature element.

The video encoding and decoding model is trained, and after the output scale parameter value is mapped according to the preset mapping relationship, the obtained scale parameter mapping value is offset toward a direction away from an adjacent rounding boundary value. For example, an overall trend of the scale parameter mapping value obtained by mapping the scale parameter value output by the video encoding and decoding model in the preset quantization mode is away from an adjacent rounding boundary value in the preset quantization mode. If a scale parameter mapping value within each mapping value interval in the preset quantization mode is represented by using a mean, for a video frame, in the scale parameter mapping value obtained by using the trained video encoding and decoding model, an actual mean of the scale parameter mapping value corresponding to the same adjacent rounding boundary value is offset relative to a reference mean of the corresponding rounding boundary value, and an offset direction is a direction away from the rounding boundary value, for example, a distance between the actual mean and the rounding boundary value is greater than a distance between the reference mean and the rounding boundary value.

Herein, a reference mean of a rounding boundary value refers to that, for the same video frame, a mean of all scale parameter mapping values using the rounding boundary value as an adjacent rounding boundary value among the scale parameter mapping values obtained by using the video encoding and decoding model before training. The video encoding and decoding model before training may be understood as a video encoding and decoding model that has not been trained by using the video encoding and decoding model processing method in this application. For example, assuming that for a video frame, scale parameter mapping values obtained by using the video encoding and decoding model before training are evenly distributed, and all scale parameter mapping values using an integer boundary 30 as an adjacent rounding boundary value are within an interval [29.5, 30], and a mean of all scale parameter mapping values is 29.75. Among the scale parameter mapping values obtained by using the trained video encoding and decoding model, for the same video frame, a mean of all scale parameter mapping values using the integer boundary 30 as an adjacent rounding boundary value may be less than 29.75, for example, may be 29.6. For example, among the scale parameter mapping values obtained by using the trained video encoding and decoding model, the mean of all scale parameter mapping values using the integer boundary 30 as an adjacent rounding boundary value is offset relative to 29.75, and is farther from the integer boundary 30.

If it is defined that a distance to a rounding boundary value less than a preset threshold approaches the rounding boundary value, the scale parameter mapping value obtained by using the video encoding and decoding model trained in this application approaches the rounding boundary value with a smaller probability compared with a scale parameter mapping value obtained with a random probability. For example, assuming that a preset threshold is b and a rounding boundary value is x, for a target video frame, the scale parameter mapping value obtained by using the video encoding and decoding model before training falls within intervals [x-b, x] and [x, x + b] with a random probability. Assuming that 50 scale parameter mapping values fall within [x-b, x] and [x, x + b], and for the same target video frame, only 20 scale parameter mapping values obtained by mapping the scale parameter values output by the trained video encoding and decoding model in this application in the preset quantization mode fall within [x-b, x] and [x, x + b], for example, a probability that the scale parameter mapping values fall into [x-b, x] and [x, x + b] is greatly reduced.

The server may separately map the scale parameter values of all feature elements in the feature map to scale parameter mapping values according to a preset mapping relationship, and then perform quantization by rounding according to respective rounding boundary values, to obtain a scale parameter quantization value of each feature element.

In some embodiments, the server may round the scale parameter values of all the feature elements according to a rounding boundary value set in the preset quantization mode. In some other embodiments, the server may round a part of feature elements according to a rounding boundary value set in the preset quantization mode.

Operation 408: Perform entropy encoding on the feature map according to the scale parameter quantization value of each feature element in the feature map, and determine a transmission data stream according to an encoded data stream obtained by entropy encoding.

Because an original scale parameter value is quantized, during entropy encoding, for each feature element, the server may re-determine a scale parameter value of the feature element based on the scale parameter quantization value corresponding to the feature element, and determine a probability distribution function for entropy encoding according to the re-determined scale parameter value, whereby the feature map is compressed into byte streams as few as possible by using the probability distribution function, and then an encoded data stream corresponding to the feature element is obtained The entropy encoding may be implemented by arithmetic coding or range coding. Using the arithmetic coding as an example, after a probability distribution function for the arithmetic coding is obtained, a probability value of each feature element in the feature map may be calculated, then the feature elements are read in one by one, each time a feature element is read in, a range of the feature map in [0, 1] is scaled down to a latest obtained interval according to a ratio, a value of the ratio is determined by the probability value of each feature element, and then iteration is performed in sequence until all feature elements are completely read, and any decimal in the obtained interval is output in a binary form to obtain an encoded data stream.

In all embodiments of the present disclosure, re-determining the scale parameter value according to the scale parameter quantization value may be implemented by using formula (12), where $\theta$ is a re-determined scale parameter value, $\sigma_{step}$ is a quantization step, and $\sigma_{min}$ is a minimum value of the scale parameter value, for example, the minimum value may be 0.11. L is a maximum quantization level, and a value of L may be set according to a requirement, for example, L may be 32. $\ddot{I}$ is a scale parameter quantization value, and a value range is 0 to L-1.

$$\boldsymbol{\theta} = \mathrm{LUT}\left(\ddot{I}\right) = \exp\left(\log(\sigma_{min}) + \sigma_{step}\,\ddot{I}\right) \quad (12)$$

In all embodiments of the present disclosure, the server may further construct a mapping relationship between $\ddot{I}$ and $\theta$ by using the foregoing formula (12), to construct a probability distribution function look-up table, for example, $\ddot{I}$=0 corresponds $\theta$=0.1100, and $\ddot{I}$=1 corresponds to $\theta$=0.1128. Therefore, after the scale parameter quantization value of each feature element is obtained, the probability distribution function look-up table may be directly searched to obtain $\theta$, whereby arithmetic coding efficiency can be improved.

In some embodiments, determining, by using the server, a probability value of the feature element after obtaining the probability distribution function for arithmetic coding may be that the probability value of the feature element is substituted into the probability distribution function to calculate the probability value. In some other embodiments, the server may subtract a corresponding position parameter value from a value at each feature element position in a feature map y, and zero-mean distribution may be learned from a feature map y_0 obtained by subtraction, whereby the server may search a pre-established probability value look-up table according to a value of each feature element in the zero-mean distribution feature map y_0 to obtain the probability value, where the pre-established probability value look-up table is established in the following mode: in the probability distribution function determined by each $\theta$ and mean 0, probability values of possible values of the feature elements are calculated, and a mapping relationship between possible values of the feature elements and the calculated probability values under each probability distribution function is established.

According to the foregoing video encoding method, because the video encoding and decoding model is obtained by training by using the video encoding and decoding model processing method according to any one of the foregoing embodiments. After the scale parameter value output by the video encoding and decoding model is mapped according to the preset mapping relationship, the obtained scale parameter mapping value is offset toward a direction away from an adjacent rounding boundary value. Therefore, when a target video frame is encoded by using the video encoding and decoding model, the scale parameter mapping value obtained after the scale parameter value in the encoding process is mapped is away from the rounding boundary value as far as possible, whereby probability of a rounding jump occurring at a decoder in a quantization process is reduced, encoding and decoding may be performed in the encoding process and the decoding process based on the same quantization result, and then accuracy of a video frame obtained by reconstructing in the decoding process is improved.

In all embodiments of the present disclosure, rounding the scale parameter mapping value obtained by mapping according to a rounding boundary value of the scale parameter mapping value to perform quantization, to obtain a scale parameter quantization value of the feature element includes: screening a feature element satisfying a preset screening condition from the feature elements in the feature map; and rounding the scale parameter mapping value of each feature element in the feature map according to a respective rounding boundary value to perform quantization, to obtain a scale parameter quantization value of the feature element, where the scale parameter mapping value of an unscreened feature element is rounded according to a rounding boundary value in a preset quantization mode, and the scale parameter mapping value of the screened feature element is rounded according to a rounding boundary value in another preset quantization mode. Determining the transmission data stream according to the encoded data stream obtained by entropy encoding includes: determining the transmission data stream of the target video frame according to the encoded data stream obtained by entropy encoding and the feature element position of each screened feature element.

The preset screening condition is that: a distance between a scale parameter mapping value of the screened feature element and a rounding boundary value that is adjacent to the scale parameter mapping value of the screened feature element is less than or equal to a preset threshold. For example, the feature elements screened by using the screening condition is a feature element whose scale parameter mapping value approaches the rounding boundary value after the scale parameter value is mapped. This part of feature elements may jump in the decoding process.

Rounding modes are different when the same scale parameter mapping value is rounded in the preset quantization mode and another quantization mode. Therefore, obtained quantization results are different when quantization is performed on the same scale parameter value in the preset quantization mode and another quantization mode. A rounding boundary value of a rounding mode in another quantization mode is different from a rounding boundary value of a rounding mode in the preset quantization mode. Therefore, a jumping feature element may be generated in the decoding process because the scale parameter mapping value approaches the rounding boundary value in the preset quantization mode. When quantization is performed in another quantization mode, a jump phenomenon may be avoided, and consistent quantization results can be obtained in the encoding process and the decoding process.

In some embodiments, a rounding mode in the preset quantization mode is rounding up, and a rounding mode in another quantization mode is rounding to nearest. In some other embodiments, a rounding mode in the preset quantization mode is rounding down, and a rounding mode in another quantization mode is rounding to nearest. In some other embodiments, a rounding mode in the preset quantization mode is rounding to nearest, and a rounding mode in another quantization mode is rounding up. In some other embodiments, a rounding mode in the preset quantization mode is rounding to nearest, and a rounding mode in another quantization mode is rounding down. Rounding up refers to rounding up to a nearest integer, for example, rounding up 2.3 to 3; rounding down refers to rounding down to a nearest integer, for example, rounding down 2.3 to 2; and rounding to nearest refers to rounding off to a nearest integer, for example, rounding 2.3 to 2.

In all embodiments of the present disclosure, the rounding mode in the preset quantization mode is any one of rounding up, rounding down, or rounding to nearest. The rounding mode in the another quantization mode is taking a fixed integer value. The screened feature element usually occupies only a small part of all feature elements in the feature map. Therefore, setting a fixed integer as a scale parameter quantization value of the screened feature element has little impact on a data compression process, but may save a quantization calculation process to some extent, and improve quantization efficiency.

In all embodiments of the present disclosure, because a part of feature elements are screened and quantization is performed by using another quantization mode that is different from the preset quantization mode, feature element positions of these feature elements may be transmitted to the decoder, whereby the decoder performs quantization in another quantization mode that is the same as that of the encoder for the feature element positions. Therefore, after obtaining the encoded data stream, the server may further encode the position information of the screened feature elements into a calibration information byte stream, and package the encoded data stream and the calibration information byte stream together to obtain the transmission data stream for transmission to the decoder. For example, the feature map may be stretched into a one-dimensional vector. In the one-dimensional vector, each value represents one position coordinate of the feature element. For a feature element whose position information may be transmitted, a value representing a position coordinate of the feature element in the one-dimensional vector is encoded to obtain a calibration byte stream. For example, assuming that a size of the feature map is 3*3*1, numbers 0 to 8 may be configured for separately representing position information of each feature element in the feature map.

In all embodiments of the present disclosure, on one hand, because a feature element whose scale parameter mapping value approaches a rounding boundary value may be screened in an encoding process, special processing is performed in another quantization mode, and a calibration byte stream is transmitted to a decoder, whereby the decoder may perform the same special processing on the feature element, consistent quantization results obtained by encoding and decoding in a cross-platform process are ensured, and accuracy of a decoded and reconstructed image is improved.

On the other hand, because a scale parameter value output by the video encoding and decoding model is constrained in a training process, in an encoding process, the scale parameter value output by the video encoding and decoding model approaches the rounding boundary value with a relatively small probability after being mapped, which ensures that fewer feature elements are obtained, and improves accuracy of a decoded and reconstructed image with relatively small consumption.

In all embodiments of the present disclosure, screening the feature element satisfying the preset screening condition from the feature elements in the feature map includes: for each feature element in the feature map, rounding, according to a rounding boundary value in a preset quantization mode, a value obtained by adding a preset threshold to the scale parameter value of the feature element, to obtain a floating quantization upper limit value of the feature element; rounding, according to a rounding boundary value in a preset quantization mode, a value obtained by subtracting a preset threshold from the scale parameter value of the feature element, to obtain a floating quantization lower limit value of the feature element; and screening a feature element satisfying the preset screening condition from the feature elements in the feature map according to the floating quantization upper limit value and the floating quantization lower limit value of each feature element.

The floating quantization upper limit value of the feature element is a value obtained by rounding, according to a rounding mode in the preset quantization mode, a value obtained by adding a preset threshold to the scale parameter mapping value of the feature element, which may represent a maximum quantization result possibly obtained for the feature element in the decoding process. The floating quantization lower limit value of the feature element is a value obtained by rounding, according to a rounding mode in the preset quantization mode, a value obtained by subtracting a preset threshold from the scale parameter mapping value of the feature element, which may represent a minimal quantization result possibly obtained for the feature element in the decoding process. Assuming that a preset precision is $\varepsilon$, a floating quantization upper limit value of the feature element is $I+\varepsilon$, the floating quantization lower limit of the feature element is $I-\varepsilon$, the floating quantization upper limit value is an integer, that is $Q(I+\varepsilon)$, obtained by rounding the $I+\varepsilon$ in a preset rounding mode, and the floating quantization lower limit value is an integer, that is $Q(I-\varepsilon)$, obtained by rounding the $I-\varepsilon$ in the preset rounding mode, and Q represents a rounding function. The floating quantization upper limit value and the floating quantization lower limit value may represent a maximum value and a minimum value of an estimated quantization value obtained by performing quantization on a scale parameter value of a feature element in a preset quantization mode in a decoding process. If a feature element satisfies a preset screening condition, for example, after the feature element is mapped to a scale parameter mapping value according to a preset mapping relationship in the preset quantization mode, a distance between the scale parameter mapping value and a rounding boundary value adjacent to the scale parameter mapping value is less than or equal to a preset threshold, the maximum value and the minimum value are certainly not equal, and at least one of the maximum value and the minimum value is not equal to a value obtained by directly quantizing the scale parameter mapping value of the feature element. Therefore, The server may determine, according to the floating quantization upper limit value and the floating quantization lower limit value of the feature element, whether the feature element satisfies the preset screening condition.

In all embodiments of the present disclosure, the floating quantization upper limit value and the floating quantization lower limit value of the scale parameter mapping value are obtained, and then the feature element may be screened according to the floating quantization upper limit value and the floating quantization lower limit value. A determining process of screening is relatively simple, and screening efficiency is improved.

In all embodiments of the present disclosure, screening the feature element satisfying the preset screening condition from the feature elements in the feature map according to the floating quantization upper limit value and the floating quantization lower limit value of each feature element includes: determining, for each feature element, a distance between the floating quantization upper limit value and the floating quantization lower limit value of the feature element; and screening a feature element from the feature map in a case that the distance is greater than zero.

Specifically, for each feature element, if the distance between the floating quantization upper limit value and the floating quantization lower limit value of the feature element is greater than 0, for example, $|(Q(I+\varepsilon) - Q(I-\varepsilon))| > 0$, if a maximum value and a minimum value of the estimated quantization value obtained by performing quantization on the scale parameter value of the feature element in the preset quantization mode are not equal, the quantization result obtained in the decoding process may include a value that is inconsistent with the quantization result obtained by performing quantization on the scale parameter value in the preset quantization mode. For example, there is a problem that quantization results are inconsistent in the encoding process and the decoding process. The server may screen the feature element, to perform special quantization in another quantization mode.

$|(Q(I+\varepsilon) - Q(I-\varepsilon))| = 0$ is calculated for a feature element, it indicates that a maximum value and a minimum value of the estimated quantization value obtained by performing quantization on the scale parameter value of the feature element in the preset quantization mode are equal. In this case, it indicates that a quantization result obtained in a decoding process is unique, for example, quantization results in the encoding process and the decoding process are consistent. Therefore, the feature element does not need to be screened.

Whether the feature element satisfies the preset screening condition can be determined according to the distance between the floating quantization upper limit value and the floating quantization lower limit value, whereby screening efficiency is improved.

In all embodiments of the present disclosure, screening the feature element satisfying the preset screening condition from the feature elements in the feature map according to the floating quantization upper limit value and the floating quantization lower limit value of each feature element includes: obtaining, for each feature element, a first distance between the floating quantization upper limit value of the feature element and a reference quantization value corresponding to the feature element, the reference quantization value corresponding to the feature element being obtained by performing quantization on the scale parameter value of the feature element in the preset quantization mode; obtaining a second distance between the floating quantization lower limit value of the feature element and the reference quantization value; and screening the feature element from the feature map in a case that either the first distance or the second distance is greater than zero.

The first distance between the floating quantization upper limit value and the scale parameter quantization value corresponding to the feature element is $|(Q(I + \varepsilon) - Q(I))|$. If it is calculated for a feature element that the first distance is greater than zero, it indicates that the maximum value of the estimated quantization value obtained after the scale parameter mapping value of the feature element positively floats at the decoder is inconsistent with a quantization result obtained by performing quantization on the scale parameter mapping value of the feature element in the preset quantization mode, whereby jump may occur at the decoder, and the server may determine that the feature element satisfies the preset screening condition. The second distance between the floating quantization lower limit value and the scale parameter quantization value corresponding to the feature element is $|(Q(I - \varepsilon) - Q(I))|$. If the second distance is greater than zero, it indicates that the minimum value of the estimated quantization value obtained after the scale parameter mapping value corresponding to the scale parameter mapping value of the feature element negatively floats at the decoder is inconsistent with a quantization result obtained by performing quantization on the scale parameter mapping value of the feature element in the preset quantization mode, whereby jump may occur at the decoder, and the server may determine that the feature element satisfies the preset screening condition.

If the first distance is equal to zero and the second distance is equal to zero, the server may determine that the feature element does not satisfy the preset screening condition.

The first distance between the floating quantization upper limit value and the scale parameter quantization value corresponding to the feature element may be obtained, and the second distance between the floating quantization lower limit value and the scale parameter quantization value corresponding to the feature element may be obtained. In a case that either the first distance or the second distance corresponding to a feature element is greater than zero, the feature element is screened. Because both the first distance and the second distance are calculated, accuracy of a screening process may be improved.

In all embodiments of the present disclosure, as shown in FIG. 5, the method is performed by a decoder. An encoder may be the server 104 or the terminal 102 in FIG. 1. In all embodiments of the present disclosure, an example in which the method is applied to the terminal in FIG. 1 is used for description. The method includes the following operations.

Operation 502: Obtain a transmission data stream, and obtain an encoded data stream from the transmission data stream, the encoded data stream being obtained by encoding a feature map of a target video frame.

Operation 504: Determine, by using a trained video encoding and decoding model, a scale parameter value corresponding to each feature element in the feature map.

The video encoding and decoding model is trained the video encoding and decoding model processing method according to any one of the foregoing embodiments. The video encoding and decoding model is trained, and after an output scale parameter value is mapped according to a preset mapping relationship, an obtained scale parameter mapping value is offset toward a direction away from an adjacent rounding boundary value.

Operation 506: Map, according to a preset mapping relationship, the scale parameter value corresponding to each feature element to obtain a scale parameter mapping value, the scale parameter mapping value being within a preset mapping value range.

Operation 508: Round the scale parameter mapping value obtained by mapping according to a rounding boundary value of the scale parameter mapping value to perform quantization, to obtain a scale parameter quantization value of the feature element.

Operation 510: Perform entropy decoding on the encoded data stream according to the scale parameter quantization value of each feature element in the feature map, and reconstruct the target video frame based on the feature map restored by the entropy decoding.

The terminal may re-determine a scale parameter value based on quantization of each scale parameter value, determine, according to the re-determined scale parameter value, a probability distribution function required for arithmetic coding, then perform arithmetic decoding according to the probability distribution function, and reconstruct the target video frame based on the feature map restored by the entropy decoding.

In all embodiments of the present disclosure, the terminal may construct a probability distribution function look-up table between the scale parameter quantization value and the scale parameter value by using the foregoing formula (12), whereby the probability distribution function look-up table may be searched to obtain a scale parameter value $\theta$ after the scale parameter quantization value is obtained. The probability distribution function for arithmetic coding is determined according to $\theta$.

In all embodiments of the present disclosure, the transmission data stream further includes a calibration information byte stream, and the calibration information byte stream is configured for determining a plurality of feature element positions. Rounding the scale parameter mapping value obtained by mapping according to a rounding boundary value of the scale parameter mapping value to perform quantization, to obtain a scale parameter quantization value of the feature element includes: screening a scale parameter value of the feature element at the determined feature element position from the scale parameter mapping value of each feature element in the feature map; and rounding the scale parameter mapping value of each feature element in the feature map according to a respective rounding boundary value to perform quantization, to obtain the scale parameter quantization value of each feature element, where an unscreened scale parameter mapping value is rounded according to a rounding boundary value of the scale parameter mapping value in a preset quantization mode, and a screened scale parameter mapping value is rounded according to a rounding boundary value of the scale parameter mapping value in another quantization mode.

According to the foregoing video decoding method, because the video encoding and decoding model is obtained by training by using the video encoding and decoding model processing method according to any one of the foregoing embodiments. After the scale parameter value output by the video encoding and decoding model is mapped according to the preset mapping relationship, the obtained scale parameter mapping value is offset toward a direction away from an adjacent rounding boundary value. Therefore, when a target video frame is encoded by using the video encoding and decoding model, the scale parameter mapping value obtained after the scale parameter value in the decoding process is mapped is away from the rounding boundary value as far as possible, whereby probability of a rounding jump occurring at a decoder in a quantization process is reduced, entropy decoding may be performed in the decoding process based on the same quantization result as that in the encoding process, and then accuracy of a video frame obtained by reconstructing in the decoding process is improved.

In all embodiments of the present disclosure, an encoder refers to a first device that may perform video encoding, a decoder refers to a second device that may perform video decoding, and the encoder and the decoder are not used to limit the first device and the second device. When the first device is configured to video decoding, the first device may be used as the decoder, and when the second device is configured to video encoding, the second device may be used as the encoder.

In all embodiments of the present disclosure, this application further provides an application scenario. In this application scenario, the video encoding method and the video decoding method of this application are configured for implementing cross-platform video encoding and decoding. A video application program may be installed on a terminal. The terminal may play a video by using the video application program. A rounding mode set by the preset quantization mode is rounding down, each integer value is a rounding boundary value, and a constraint reference mapping value corresponding to a scale parameter mapping value is an interval midpoint value of each mapping value interval, for example, an average value of every two adjacent integers.

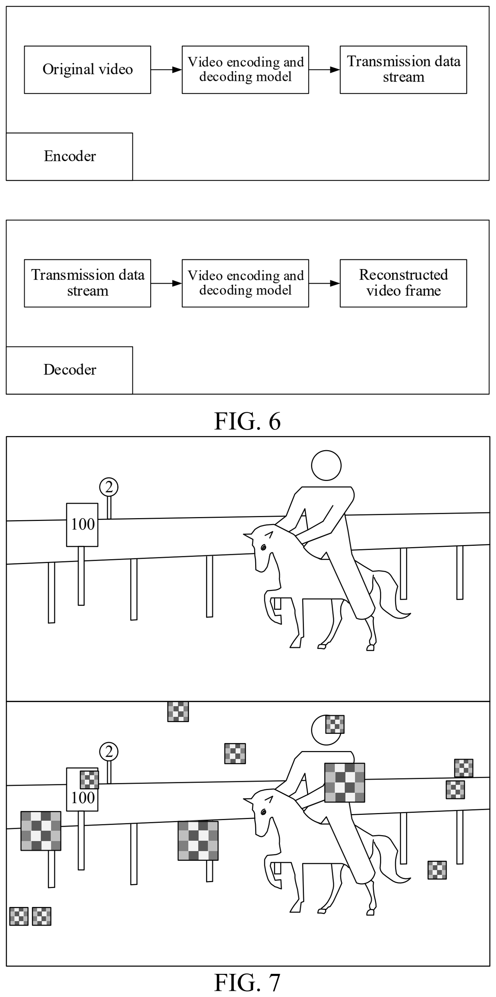

Referring to FIG. 6, the server, as an encoder, performs video encoding on each video frame in an original video to obtain a transmission data stream, and then sends the transmission data stream to a terminal. The terminal, as a decoder, performs decoding according to the transmission data stream to obtain a reestablished video frame, so as to play a video based on the reestablished video frame.

Still referring to FIG. 6, in all embodiments of the present disclosure, encoding at an encoder and decoding at a decoder are both implemented based on a video encoding model. The video encoding model is an AI model, and may be implemented by using a neural network. An encoding and decoding process of a video encoding and decoding model mainly includes two operations, which are respectively I-frame encoding and decoding (intra-frame encoding) and P-frame encoding and decoding (inter-frame encoding). Usually, I-frame encoding and decoding is implemented by using an AI image encoding and decoding algorithm. A P-frame encoding and decoding model may be designed for characteristics of inter-frame encoding, and is usually divided a motion estimation module and a residual compensation module. A core idea of video encoding is to convert an original image into some feature maps that may be transmitted, and reduce a byte amount for feature map transmission by entropy encoding, whereby a byte size for video transmission is greatly reduced.

In an encoding operation, for an I-frame model, an original image is converted into a to-be-transmitted feature map for transmission. For a P-frame model, an original image is usually converted into a motion estimation feature map and a residual compensation feature map for transmission. In a decoding operation, an I-frame model reconstructs an I-frame image after receiving a feature map. The P-frame model reconstructs motion estimation after receiving the motion estimation feature map, and acts on a referenced I-frame reconstructed image to obtain a P-frame intermediate result for motion estimation. Finally, residual compensation information is reconstructed by using the residual compensation feature map, and acts on the P-frame intermediate result, whereby a reconstructed image of a P-frame is obtained.

How to transmit the feature map may usually be implemented by entropy encoding estimation. Entropy encoding is a common data compression technology, and is an important operation in a video encoding and decoding technology. In video encoding, entropy encoding is usually used for compressing residual data, a motion vector, and other encoding parameters in a video encoder, to reduce storage space and transmission bandwidth of video data.

An objective of an entropy encoding estimation module is to estimate, according to an input encoded data stream, a bit number for entropy encoding of the encoded data stream. This module is usually implemented based on a statistical model, and analyzes and models an encoded data stream, to reduce the bit number as much as possible in an entropy encoding process. Common entropy encoding algorithms include Huffman coding, arithmetic coding, and the like. Using arithmetic coding as an example, in an entropy encoding process, arithmetic coding calculation may be performed on each feature element (which may be understood as each value in a feature map). To have a higher compression rate, a high-precision probability estimation function is usually introduced in the entropy encoding process. However, to completely and correctly decode a corresponding element from a byte stream encoded by an encoder, the decoder may use a probability estimation function that is completely the same as that of the encoder.

In a process of performing encoding and decoding calculation, encoding/decoding calculation, a single-precision float is usually used for calculation. When both an encoder and a decoder run in the same computing environment of the same machine, it is easy to ensure that a consistent probability estimation function is used for encoding and decoding, or ensure that a calculation error is within a tolerable range of encoding and decoding. However, when the encoder and the decoder run on different machines or in different computing environments, single-precision float calculation performed under different conditions may have a relatively large precision error. Consequently, accuracy of an image obtained by decoding by using the decoder is low, and a decoding failure is caused. A decoding failure phenomenon is shown in FIG. 7. A Mosaic position in FIG. 7 is a pixel that fails to be decoded.

To resolve a problem of decoding failure caused by a precision error because of cross-platform calculation on the encoder and the decoder, in a related technology, all sub-modules of a video encoding and decoding model may be converted from uncertain single-precision float calculation to deterministic int calculation. A conversion process may follow a rule, and some alignment training work may be performed. Such a conversion process loses precision of the video encoding and decoding model, causing reduction of performance of the video encoding and decoding model.

In all embodiments of the present disclosure, for the pre-trained video encoding and decoding model, in a case that other model parameters other than the model parameter of the entropy model in the pre-trained video encoding and decoding model are frozen, a piecewise Gaussian function constraint is used on an output of the entropy model, to perform finetune on the model parameter of the entropy model, and then a trained video encoding model is obtained. In a process in which the encoder performs encoding by using the trained video encoding model, feature elements approaching an integer boundary are screened, and then some redundant byte streams are additionally transmitted to represent positions of these feature elements. When performing decoding by using the trained video encoding model, the decoder performs, according to received redundant information, processing that is consistent with the encoder on a non-deterministic element that may have an error with the encoder, to avoid a problem of inconsistent calculation results caused by a calculation precision error of the encoder and the decoder, and further to align calculation results of the encoder and the decoder. Because a piecewise Gaussian constraint is performed, in the encoding process, an output value of the entropy model may approach an integer boundary with a relatively small probability after being mapped. Therefore, redundant information only may be transmitted for a small quantity of feature elements, whereby cross-platform encoding and decoding can be implemented on the encoder with relatively small consumption. On the decoder, an output value of the entropy model may alternatively approach an integer boundary with a relatively small probability after being mapped. Therefore, in a decoding process, encoding and decoding consistency of a feature element to which position information is transmitted can be ensured, other feature elements to which positions are not transmitted can be ensured not to jump as far as possible, whereby accuracy of an image obtained by decoding and reconstructing is greatly improved.

The video encoding method and the video decoding method implemented by using the video encoding and decoding model trained in all embodiments of the present disclosure may provide services as a software interface mode, to resolve a problem that calculation inconsistency exists in a cross-platform scenario on an encoder and a decoder, whereby the decoder can decode to obtain a correct decoded video frame.

I. Training a video encoding and decoding model

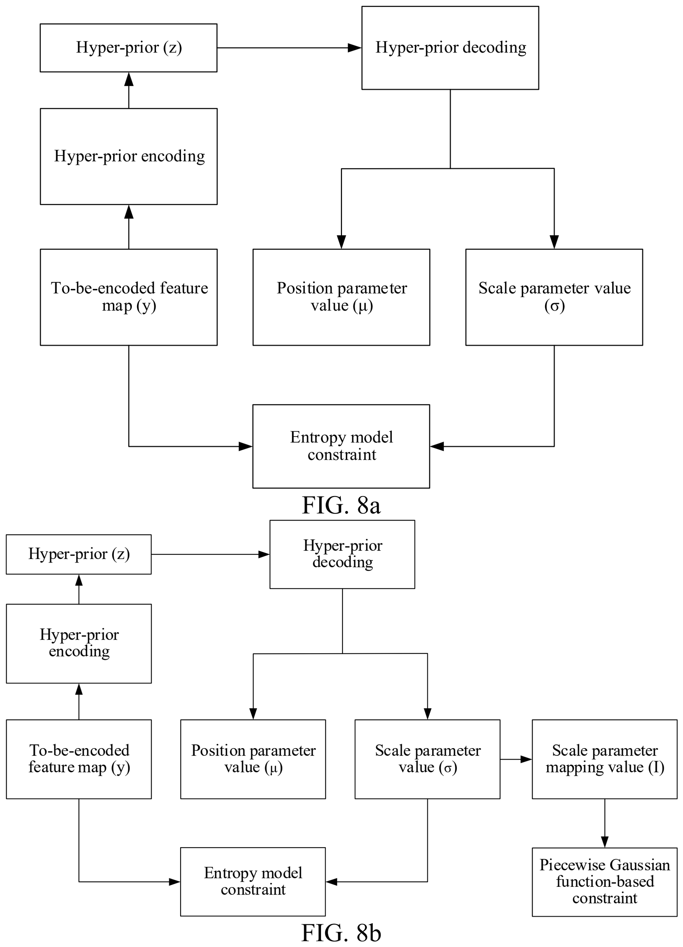

Referring to FIG. 8a, essence of an entropy model is to evaluate a difference between a probability distribution q predicted by the model and an actual distribution p of a feature map y. When the probability distribution q and the actual distribution p are closer to each other, the feature map y may be compressed by using smaller bytes. When the probability distribution q and the actual distribution p are farther from each other, the feature map y may be compressed by using more bytes. When a video encoding and decoding model is trained in a related technology, a loss of training the video encoding and decoding model is the foregoing loss $\mathcal{L}_{gen}$. The trained video encoding and decoding model does not constrain a scale parameter value $\sigma$ output by the entropy model. Therefore, a scale parameter mapping value I calculated according to the scale parameter value $\sigma$ randomly approaches an integer boundary, and a probability of approaching the integer boundary increases as a cross-platform calculation error increases.

Referring to FIG. 8b, in this application, in a case that other model parameters other than the model parameter of the entropy model in the video encoding and decoding model may be frozen after the video encoding and decoding model having normal encoding and decoding capabilities is pre-trained, a piecewise Gaussian function-based constraint may be additionally applied to a scale parameter mapping value obtained after mapping a scale parameter value output by an entropy model, whereby the scale parameter value output by the entropy model is indirectly constrained. A quantization constraint loss $\mathcal{L}_{cal}$ is first calculated. Calculation operations are as follows:

1. Obtain a training video frame, extract a feature map of the training video frame by using a feature extraction model in a video encoding and decoding model, and determine, by using an entropy model in the video encoding and decoding model, a scale parameter value corresponding to each feature element in the feature map.

2. Map each feature element to a preset mapping value range according to a preset mapping relationship, to obtain a scale parameter mapping value corresponding to each feature element.
For the preset mapping relationship, refer to the foregoing (1) and (2).

3. Obtain an interval midpoint value of a mapping value interval to which each scale parameter mapping value belongs, and use the interval midpoint value as a constraint reference mapping value of each scale parameter mapping value.

4. Obtain a preset Gaussian distribution function.
Herein, a formula of the preset Gaussian distribution function is the foregoing formula (3), and an output of the Gaussian distribution function is an expected probability value. The Gaussian distribution function is a piecewise function, which is represented by using an interval midpoint as a mean, and using 1 as a standard deviation within each integer interval.

5. Input each scale parameter mapping value into the preset Gaussian distribution function to calculate an expected probability value of each scale parameter mapping value, and input a constraint reference mapping value corresponding to each scale parameter mapping value into the preset Gaussian distribution function to obtain an expected probability value of each constraint reference mapping value.

6. Determine, based on a difference between the expected probability value of each scale parameter mapping value and the expected probability value of the corresponding constraint reference mapping value, a quantization constraint sub-loss corresponding to each scale parameter mapping value.

7. Determine a loss weight corresponding to each scale parameter mapping value.
An attribution relationship between the scale parameter mapping value and the preset value interval may be determined with reference to the foregoing formula (5), and the loss weight is determined according to the attribution relationship.

8. Determine a quantization constraint loss of the training video frame based on the quantization constraint sub-loss and the loss weight separately corresponding to each scale parameter mapping value.

For a calculation process herein, refer to the foregoing formula (4).

Further, a reconstruction distortion loss and a bit-rate loss may be calculated according to the formulas (6) to (9), then a total loss is calculated according to the formulas (10) to (11), and a model parameter of the entropy model is updated according to the total loss, to obtain a trained video encoding and decoding model. The trained video encoding and decoding model may be deployed on an encoder to implement video encoding, and may be deployed on a decoder to implement video decoding.

II. Video encoding and video decoding

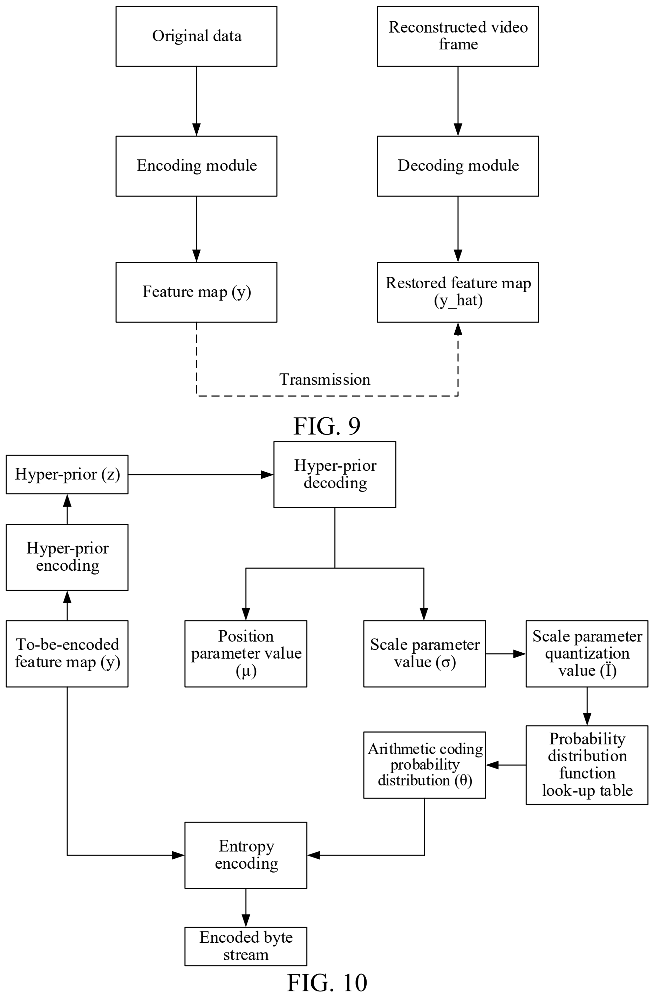

First, an encoding and decoding model in this application is described. Referring to FIG. 9, after to-be-encoded data (which may be a video frame, an image, motion estimation data, residual estimation data, or the like) of a target video frame is pre-coded by using an encoding module, feature extraction may be performed on the to-be-encoded data to perform first-stage compression, to obtain a feature map. After obtaining a restored feature map, the decoder may reconstruct the target video frame by using a decoding module.

For how to transmit the feature map, second-stage encoding, for example, an arithmetic coding module, may be introduced. Referring to FIG. 10, a feature map y obtained from the video encoding and decoding model is a to-be-encoded feature map. The to-be-encoded feature map may be encoded by using a hyper-prior encoding module to obtain a hyper-prior z, and the hyper-prior is transmitted to the decoder in a particular mode. On an encoder, after the hyper-prior z is obtained, hyper-prior decoding (for example, hyper-prior decoding in FIG. 10) may be performed on z, to obtain $(\mu, \sigma)$ corresponding to each feature element in the to-be-encoded feature map y, $(\mu, \sigma)$ may be understood as probability estimation for y, and helps to perform compression with a higher compression rate in a subsequent entropy encoding operation, where $\mu$ refers to a scale parameter value of a probability distribution of the feature element, and $\sigma$ refers to a position parameter value of the probability distribution of the feature element. Then, $\sigma$ is quantized into a scale parameter quantization value $\ddot{I}$, and finally a re-determined scale parameter value $\theta$ is obtained by looking up a probability distribution function look-up table by using $\ddot{I}$, a probability distribution function of the arithmetic coding may be determined according to $\theta$, and a probability value of the feature element may be determined by using the probability distribution function, whereby information of the to-be-encoded feature map may be compressed by arithmetic coding, to obtain an encoded byte stream (for example, the foregoing encoded data stream).

At the entropy encoding module, a scale parameter value $\sigma_i$ of each feature element may be mapped to obtain a scale parameter mapping value $I$ according to the preset mapping relationship of formulas (1) and (2), and then rounding may be performed by using the following formula (13), to obtain a scale parameter quantization value $\ddot{I}_i$, where Q represents a rounding down quantization function. In all embodiments of the present disclosure, for rounding down, each integer may be used as a rounding boundary value. Therefore, rounding down refers to rounding down to a nearest integer.

$$\ddot{I} = Q(I) = \lfloor I \rfloor \quad (13)$$

A corresponding $\theta_i$ value may be found from the probability distribution function look-up table by using $\ddot{I}_i$. A probability distribution function for arithmetic coding may be determined by using $\theta_i$, y may be compressed into byte streams as few as possible, for example, an encoded byte stream (for example, the foregoing encoded data stream) is obtained, to facilitate subsequent transmission. The probability distribution function look-up table may be constructed by using the foregoing formula (12).

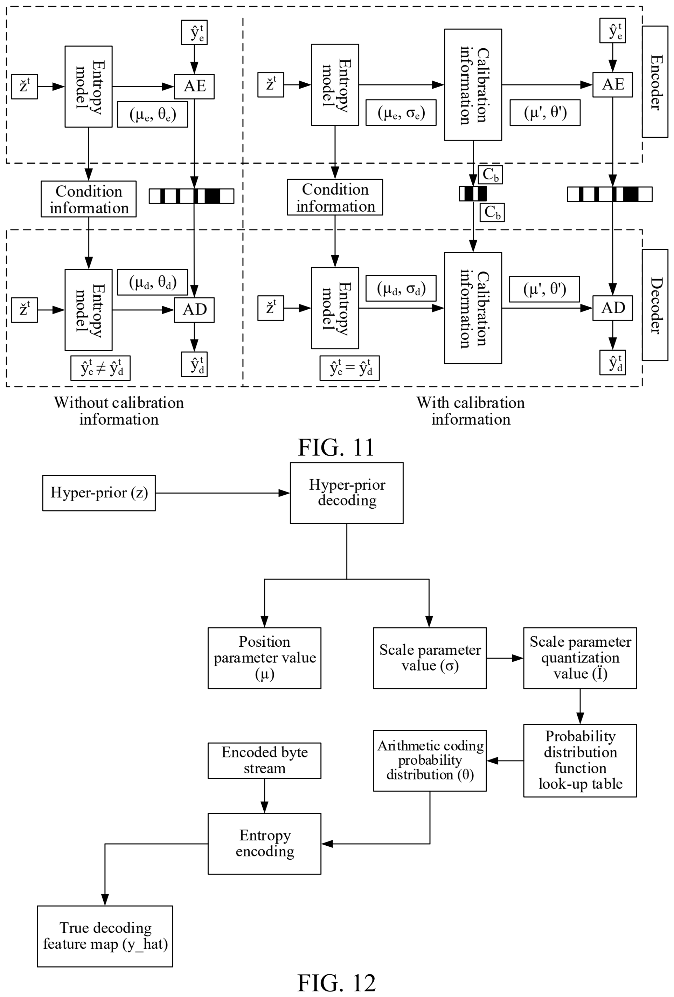

Referring to FIG. 11, in an encoding process on an encoder, in a related technology, as shown in a left block diagram in FIG. 11, after an entropy model estimates a probability distribution according to a hyper-prior and condition information and performs quantization on a scale parameter value, $(\mu_e, \theta_e)$ may be obtained. In an encoding process at a decoder, the entropy model estimates a probability distribution according to a hyper-prior and condition information and performs quantization on a scale parameter value to obtain $(\mu_d, \theta_d)$. A problem of calculation inconsistency is caused by obtaining $\theta_e$ and $\theta_d$ across platforms. Subscripts e and d respectively represent an encoder and a decoder. The condition information may be reference information of a previous frame, for example, may be a feature map of the previous frame. Referring to a right side of FIG. 11, in this application, a process of quantizing to obtain $\theta$ is improved, and calibration information $C_b$ is introduced. Therefore, the encoder and the decoder can calculate to obtain consistent $(\mu', \theta')$, the same encoding and decoding parameter is used during arithmetic coding, and a correct reconstruction result is finally obtained.

After the scale parameter value of the feature element is calculated to obtain a scale parameter mapping value $I_e$ at the encoder with reference to the foregoing formula (1) and formula (2), a scale parameter quantization value $\ddot{I}$ may be calculated by using formula (14), formula (15), and formula (16), and finally, $\theta_e$ is obtained by using the probability distribution function look-up table, as shown below:

$$C_b = \left\{(x, y, z) \middle| \left(\left|\left(Q(I_e + \varepsilon) - Q(I_e - \varepsilon)\right)\right| > 0\right)\right\} \quad (14)$$

$$Q_D(I) = \lfloor I \rceil \quad (15)$$

$$\ddot{I}' = \begin{cases} Q(I), (x, y, z) \notin C_b \\ Q_D(I), (x, y, z) \in C_b \end{cases} \quad (16)$$

where $\varepsilon$ is a precision parameter, for example, a preset threshold in the foregoing preset screening condition, $\varepsilon$ may be set according to a requirement, for example, may be set to 1e-4, $Q$ is a quantization function in formula (13), and $Q_D$ in formula (15) indicates rounding to nearest. In all embodiments of the present disclosure, for rounding to nearest, an average value of every two adjacent integers may be used as a rounding boundary value. Therefore, the rounding to nearest herein means that the scale parameter quantization value of an input feature element is rounded off to a nearest integer. The foregoing formulas (14) to (16) may be simply summarized as determining $I_e$ of all feature elements by using the preset screening condition $|(Q(I_e + \varepsilon) - Q(I_e - \varepsilon))| > 0$, screening out feature elements that satisfy a preset screening condition, for example, scale parameter mapping values of the feature elements approach an integer boundary, transmitting position information of these feature elements to a decoder as calibration information. In addition, rounding down set in a preset quantization mode is replaced with rounding off for these feature elements that satisfy the preset screening condition, to ensure that these elements are calculated on an encoder and a decoder to obtain consistent values. For feature elements that do not satisfy the preset screening condition, original rounding down is still used, and consistency of calculation of these feature elements on the encoder and the decoder can still be ensured. Therefore, completely the same $\theta$ is obtained on the encoder and the decoder, then a problem of a decoding error on the decoder is solved, and accuracy of an image reconstructed on the decoder is improved. In a training process, because an output value of the entropy model is constrained to a direction away from an integer boundary, a scale parameter quantization value obtained by using the entropy model in an encoding process may be offset to a direction away from an adjacent integer boundary in a preset quantization mode, and a small quantity of $I_e$ values may be screened out, for example, consistency of calculation on the encoder and the decoder can be achieved by only transmitting the position information of a small quantity of feature elements.

FIG. 12 is a schematic flowchart of a decoder. Hyper-prior decoding of the decoder is consistent with hyper-prior decoding of an encoding part. When obtaining a transmission data stream, the decoder may obtain a hyper-prior z (for example, the foregoing auxiliary encoding information), an encoded data stream, and a calibration byte stream from the transmission data stream. Further, the decoder may perform hyper-prior decoding on z, to obtain a scale parameter value $\sigma$ and a position parameter value $\mu$ of each feature element in a corresponding to-be-encoded feature map. The decoder may further perform quantization on the $\sigma$ obtained by hyper-prior decoding to obtain a quantization value $\ddot{I}$, then obtain a probability distribution parameter $\theta$ through a probability distribution function look-up table, and decode the byte stream obtained by encoding on the encoder to obtain a feature map y_hat, whereby a final reconstructed image is obtained by performing a subsequent decoding operation. In a process of quantizing to a quantization value $\ddot{I}'$, a scale parameter mapping value $I$ is obtained with reference to the foregoing formulas (1) and (2) first, and then a feature element to which position information is transmitted by the encoder is determined according to a calibration information byte stream. For $I$ of the feature element to which the position information is transmitted by the encoder, rounding is performed by the formula (13), whereby a quantization result that is consistent with that of the encoder can be obtained. For $I$ of another feature element, rounding is performed in an original rounding mode, for example, the formula (15). Because an output value of an entropy model of the decoder may similarly approach the integer boundary with a relatively small probability after being mapped, another feature element to which a position is not transmitted may be similarly ensured to no jump, whereby accuracy of an image obtained by decoding and reconstructing is greatly improved.

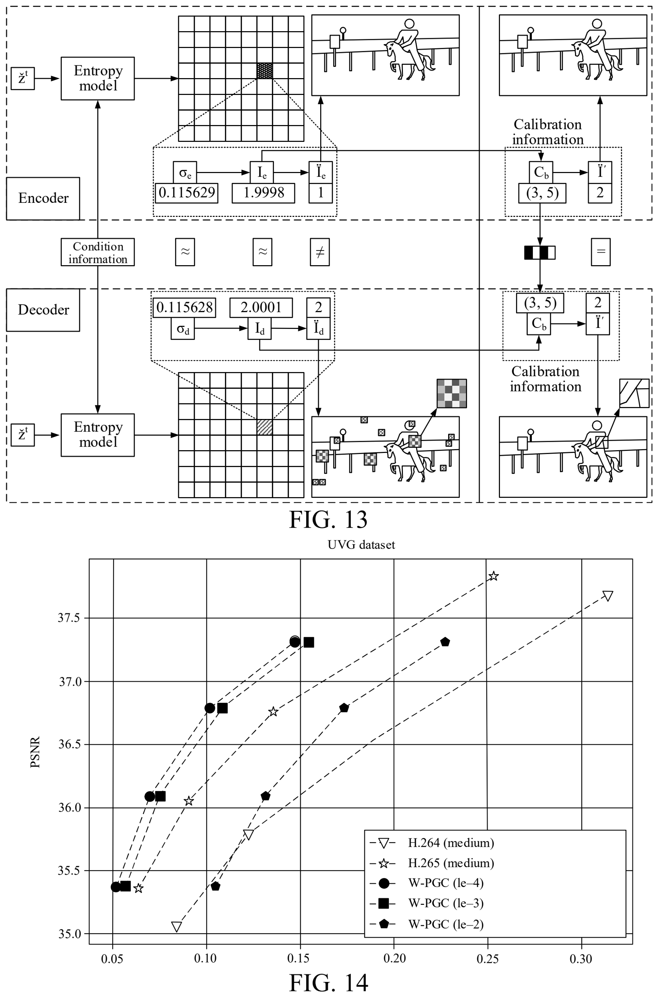

For example, referring to FIG. 13, when calibration information transmission is not used (shown in a left side of FIG. 13), a platform difference of an encoder and a decoder leads to a subtle difference of $\sigma$ on the decoder, so a different $\ddot{I}$ is obtained in a subsequent calculation. For an example in the left side of FIG. 13, $\ddot{I}$ obtained by the encoder is 1, and $\ddot{I}$ obtained by the decoder is 2, whereby inconsistency of $\theta$ for arithmetic coding and decoding is caused, thereby causing a decoding error, and finally obtaining a wrong. However, if a solution provided in all embodiments of the present disclosure is used (shown in a right side of FIG. 13), preset screening condition determination shown in formula (14) is performed on $I_e$ obtained by the encoder, to determine feature elements that may cause an integer edge jump in $I_e$, and position information representing these feature elements is transmitted to the decoder by using a calibration information byte stream. For example, position information of a feature elements at coordinates (3, 5) is transmitted to the decoder by using the calibration information byte stream. The encoder and the decoder perform special processing on the feature element at the coordinates (3, 5) in a quantization mode shown in formula (15), to obtain $\ddot{I}'$ that is completely consistent on the encoder and the decoder (for example, as shown in the right side of FIG. 13, the encoder and the decoder obtain consistent 2), and finally, the decoder can correctly decode to obtain a reconstructed image.

In all embodiments of the present disclosure, experiments are performed on encoding and decoding processes under different calculation precision errors. As shown in FIG. 14, w PGC represents that the solution provided in all embodiments of the present disclosure is used, for example, a piecewise Gaussian constraint is performed on an entropy model and a calibration information byte stream is transmitted. In FIG. 14, a horizontal coordinate is a bit per pixel (BPP), a vertical coordinate is a peak signal to noise ratio (PSNR), and 1e-4, 1e-3, and 1e-4 in parentheses represent different calculation precision errors. It may be learned from a curve in FIG. 14 that, under different calculation precision errors, after the solution of this application is used, the PSNR is significantly improved compared with an H.265 encoder and an H.264 encoder.

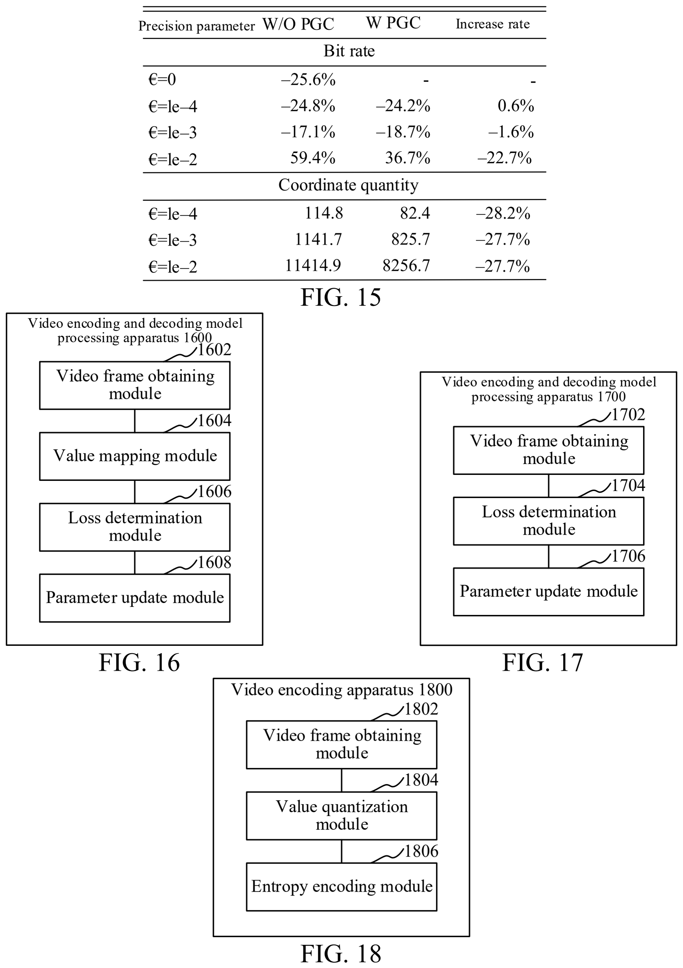

As shown in FIG. 15, all embodiments of the present disclosure further compare a solution (a Gaussian constraint is not performed on the entropy model) in which only the calibration information byte stream is transmitted. It may be learned from FIG. 15 that, under different precision errors, after this application is used, most model metrics (BD-rate) can be improved, and byte consumption of additional transmission may be reduced. By collecting statistics on a quantity of CIT, it can be learned that, under different calculation precision errors, after this application is used, a calibration coordinate quantity can be reduced by 28% on average.

Although operations in the flowcharts involved in the foregoing embodiments are sequentially displayed according to instructions of arrows, these operations are not necessarily sequentially performed according to a sequence instructed by the arrows. Unless otherwise explicitly specified in this application, execution of these operations is not strictly limited, and these operations may be performed in other sequences. Moreover, at least part operations in the flowcharts involved in the foregoing embodiments may include a plurality of operations or a plurality of stages. These operations or stages are not necessarily performed at the same moment but may be performed at different moments. These operations or stages are not necessarily sequentially performed, but may be in turn or alternately performed with other operations or at least part of the operations or stages in other operations.

Based on the same inventive concept, all embodiments of the present disclosure further provide a video encoding and decoding model processing apparatus configured to implement the video encoding and decoding model processing method involved above, a video encoding apparatus configured to implement the video encoding method involved above, and a video decoding apparatus configured to implement the video decoding method involved above. Implementation solutions provided by these apparatuses for resolving problems are similar to those described in the foregoing methods. For limitations on one or more of embodiments of the encoding and decoding model processing apparatus, the video encoding apparatus, and the video decoding apparatus provided below, refer to limitations on the foregoing encoding and decoding model processing method.

In all embodiments of the present disclosure, as shown in FIG. 16, a video encoding and decoding model processing apparatus 1600 is provided, including:

a video frame obtaining module 1602, configured to: obtain a training video frame, extract a feature map of the training video frame by using a video encoding and decoding model, and determine a scale parameter value corresponding to each feature element in the feature map;

a value mapping module 1604, configured to map, according to a preset mapping relationship, the scale parameter value corresponding to each feature element to obtain a scale parameter mapping value, the scale parameter mapping value being within a preset mapping value range;

a loss determination module 1608, configured to: obtain a constraint reference mapping value corresponding to each scale parameter mapping value, and determine a quantization constraint loss of the training video frame based on a difference between the scale parameter mapping value corresponding to each feature element and the constraint reference mapping value corresponding to the scale parameter mapping value, a distance between the constraint reference mapping value and a rounding boundary value of the scale parameter mapping value corresponding to the constraint reference mapping value being farther than a distance between the scale parameter mapping value corresponding to the constraint reference mapping value and the rounding boundary value; and

a parameter update module, configured to update at least a part of model parameters of the video encoding and decoding model based on the quantization constraint loss, to obtain a trained video encoding and decoding model.

According to the foregoing video encoding and decoding model processing apparatus, because the constraint reference mapping value is farther from the rounding boundary value than the corresponding scale parameter mapping value, the quantization constraint loss determined based on the difference between the scale parameter mapping value and the corresponding constraint reference mapping value may reflect how far the scale parameter mapping value is from the rounding boundary value. When parameter update is performed on the video encoding and decoding model based on the quantization constraint loss, the scale parameter mapping value corresponding to the scale parameter value output by the video encoding and decoding model may be constrained, and then the scale parameter value output by the video encoding and decoding model is indirectly constrained, whereby the scale parameter value output by the video encoding and decoding model shifts in a direction away from the rounding boundary value after being mapped, for example, a probability that the scale parameter mapping value approaches the rounding boundary value decreases, and a problem that quantization results obtained in an encoding process and a decoding process are inconsistent in a cross-platform encoding and decoding scenario is alleviated. Therefore, accuracy of a reconstructed video frame in the decoding process can be improved.

In all embodiments of the present disclosure, the loss determination module is further configured to: determine, based on the difference between the scale parameter mapping value corresponding to each feature element and the constraint reference mapping value corresponding to each scale parameter mapping value, a quantization constraint sub-loss corresponding to each scale parameter mapping value; determine a loss weight corresponding to each scale parameter mapping value; and determine a quantization constraint loss of the training video frame based on the quantization constraint sub-loss and the loss weight separately corresponding to each scale parameter mapping value.

In all embodiments of the present disclosure, the loss determination module is further configured to: determine an attribution relationship between each scale parameter mapping value and a preset value interval, a scale parameter mapping value belonging to the preset value interval and a scale parameter mapping value obtained after a feature element corresponding to the scale parameter mapping value is encoded and then decoded having a consistent rounding result; determine a loss weight corresponding to each scale parameter mapping value according to the attribution relationship between each scale parameter mapping value and the preset value interval; and determine a quantization constraint loss of the training video frame based on the quantization constraint sub-loss and the loss weight separately corresponding to each scale parameter mapping value.

In all embodiments of the present disclosure, the loss determination module is further configured to: determine a loss weight corresponding to the scale parameter mapping value belonging to the preset value interval as a first weight; and determine a loss weight corresponding to a scale parameter mapping value not belonging to the preset value interval as a second weight, the second weight being greater than the first weight.

In all embodiments of the present disclosure, a distance between the scale parameter mapping value belonging to the preset value interval and the corresponding constraint reference mapping value is less than a preset threshold.

In all embodiments of the present disclosure, a distance between the scale parameter mapping value belonging to the preset value interval and a lower limit of the preset mapping value range is less than a preset threshold.

In all embodiments of the present disclosure, the loss determination module is further configured to: obtain a preset probability distribution function, the probability distribution function being configured for inputting the scale parameter mapping value within the preset mapping value range, and outputting an expected probability value of the input scale parameter mapping value; determine, by using the probability distribution function, an expected probability value of each scale parameter mapping value and an expected probability value of a constraint reference mapping value corresponding to each scale parameter mapping value; determine, based on a difference between the expected probability value of each scale parameter mapping value and the expected probability value of the corresponding constraint reference mapping value, a quantization constraint sub-loss corresponding to each scale parameter mapping value; and determine a quantization constraint loss of the training video frame according to the quantization constraint sub-loss corresponding to each scale parameter mapping value.

In all embodiments of the present disclosure, within a range from constraint reference mapping value to a nearest rounding boundary value of the constraint reference mapping value within the preset mapping value range, a closer distance between the scale parameter mapping value input into the probability distribution function and the constraint reference mapping value indicates a larger expected probability value output by the probability distribution function.

In all embodiments of the present disclosure, the loss determination module is further configured to: determine a difference between each scale parameter mapping value and the corresponding constraint reference mapping value; determine, according to the difference between each scale parameter mapping value and the corresponding constraint reference mapping value, a quantization constraint sub-loss corresponding to each scale parameter mapping value; and determine a quantization constraint loss of the training video frame according to the quantization constraint sub-loss corresponding to each scale parameter mapping value.

In all embodiments of the present disclosure, at least a part of model parameters of the video encoding and decoding model are updated based on a quantization constraint loss, a bit-rate loss, and a reconstruction distortion loss. The bit-rate loss and the reconstruction distortion loss are calculated by using a loss calculation operation. The loss determination module is further configured to: determine a probability value of each feature element according to a scale parameter value and a position parameter value of a probability distribution of each feature element, the position parameter value of each feature element being obtained by predicting the probability distribution of each feature element; determine a probability value of the training video frame according to the probability value of each feature element, and perform cross-entropy calculation on the probability value of the training video frame, to obtain the bit-rate loss; and determine a reconstructed video frame of the training video frame, and determine the reconstruction distortion loss according to a difference between the training video frame and the reconstructed video frame of the training video frame.

In all embodiments of the present disclosure, as shown in FIG. 17, a video encoding and decoding model processing apparatus 1700 is provided, including:

a video frame obtaining module 1702, configured to: obtain a training video frame, extract a feature map of the training video frame by using a video encoding and decoding model, and determine a scale parameter value corresponding to each feature element in the feature map;

a loss determination module 1704, configured to: obtain a constraint reference value corresponding to each scale parameter value, and determine a quantization constraint loss of the training video frame based on a difference between each scale parameter value and the corresponding constraint reference value, after being mapped to a preset mapping value range according to a preset mapping relationship, the constraint reference value being farther from a rounding boundary value of a scale parameter mapping value obtained by mapping the corresponding scale parameter value than a scale parameter value corresponding to the constraint reference value; and

a parameter update module 1706, configured to update at least a part of model parameters of the video encoding and decoding model based on the quantization constraint loss, to obtain a trained video encoding and decoding model.

According to the foregoing video encoding and decoding model processing apparatus, because after being mapped to a preset mapping value range according to a preset mapping relationship, the constraint reference value is farther from the rounding boundary value than the corresponding scale parameter value, the quantization constraint loss determined based on the difference between the scale parameter value and the corresponding constraint reference value may reflect how far the scale parameter mapping value is from the rounding boundary value, and the scale parameter value output by the video encoding and decoding model may be constrained when parameter update is performed on the video encoding and decoding model based on the quantization constraint loss, whereby the scale parameter value output by the video encoding and decoding model shifts in a direction away from the rounding boundary value, for example, a probability that the scale parameter mapping value approaches the rounding boundary value decreases, and a problem that quantization results obtained in an encoding process and a decoding process in a cross-platform encoding and decoding scenario are inconsistent is alleviated. Therefore, accuracy of a reconstructed video frame in the decoding process can be improved. In addition, because the quantization constraint loss directly acts on the scale parameter value, a value directly output by the video encoding and decoding model may be constrained. Another additional mapping operation does not need to be performed in the training process, and training efficiency is relatively high.

In all embodiments of the present disclosure, the loss determination module is further configured to: determine, based on the difference between each scale parameter value and the corresponding constraint reference value, a quantization constraint sub-loss corresponding to each scale parameter value; determine a loss weight corresponding to each scale parameter value; and determine a quantization constraint loss of the training video frame based on the quantization constraint sub-loss and the loss weight separately corresponding to each scale parameter value.

In all embodiments of the present disclosure, the loss determination module is further configured to: determine an attribution relationship between each scale parameter value and a preset value interval, a scale parameter value belonging to the preset value interval and a scale parameter value obtained after a feature element corresponding to the scale parameter value is encoded and then decoded having a consistent quantization result; determine the loss weight corresponding to each scale parameter mapping value according to the attribution relationship between each scale parameter value and the preset value interval; and determine a quantization constraint loss of the training video frame based on the quantization constraint sub-loss and the loss weight separately corresponding to each scale parameter value.

In all embodiments of the present disclosure, the loss determination module is further configured to: determine a loss weight corresponding to the scale parameter value belonging to the preset value interval as a first weight; and determine a loss weight corresponding to a scale parameter value not belonging to the preset value interval as a second weight, the second weight being greater than the first weight.

In all embodiments of the present disclosure, a distance between the scale parameter value belonging to the preset value interval and the corresponding constraint reference value is less than a preset threshold.

In all embodiments of the present disclosure, a distance between the scale parameter value belonging to the preset value interval and a lower limit of the scale parameter value range is less than a preset threshold.

In all embodiments of the present disclosure, the loss determination module is further configured to: obtain a preset probability distribution function, the probability distribution function being configured for inputting the scale parameter value, and outputting an expected probability value of the input scale parameter value; determine, by using the probability distribution function, an expected probability value of each scale parameter value and an expected probability value of a constraint reference value corresponding to each scale parameter value; determine, based on a difference between the expected probability value of each scale parameter value and the expected probability value of the corresponding constraint reference value, a quantization constraint sub-loss corresponding to each scale parameter value; and determine a quantization constraint loss of the training video frame according to the quantization constraint sub-loss corresponding to each scale parameter value.

In all embodiments of the present disclosure, in a domain of the scale parameter value, within a range from the constraint reference value to the scale parameter value that is nearest the constraint reference value and that is configured for mapping to a rounding boundary value, a closer distance between the scale parameter value input into the probability distribution function and the constraint reference value indicates a larger expected probability value output by the probability distribution function.

In all embodiments of the present disclosure, the loss determination module is further configured to: determine a difference between each scale parameter value and the corresponding constraint reference value; determine, according to the difference between each scale parameter value and the corresponding constraint reference value, a quantization constraint sub-loss corresponding to each scale parameter value; and determine a quantization constraint loss of the training video frame according to the quantization constraint sub-loss corresponding to each scale parameter value.

In all embodiments of the present disclosure, at least a part of model parameters of an entropy model are updated based on a quantization constraint loss, a bit-rate loss, and a reconstruction distortion loss. The bit-rate loss and the reconstruction distortion loss are calculated by using a loss calculation operation. The loss determination module is further configured to: determine a probability value of each feature element according to a scale parameter value and a position parameter value of a probability distribution of each feature element, the position parameter value of each feature element being obtained by predicting the probability distribution of each feature element; determine a probability value of the training video frame according to the probability value of each feature element, and perform cross-entropy calculation on the probability value of the training video frame, to obtain the bit-rate loss; and determine a reconstructed video frame of the training video frame, and determine the reconstruction distortion loss according to a difference between the training video frame and the reconstructed video frame of the training video frame.

In all embodiments of the present disclosure, as shown in FIG. 18, a video encoding apparatus 1800, including:

a video frame obtaining module 1802, configured to: obtain a target video frame, extract a feature map of the target video frame by using a trained video encoding and decoding model, and determine a scale parameter value corresponding to each feature element in the feature map, the video encoding and decoding model being obtained by training by using the video encoding and decoding model processing apparatus according to any one of the above embodiments;

a value quantization module 1804, configured to: for each feature element in the feature map, obtain a scale parameter mapping value after mapping the scale parameter value of the feature element to a preset mapping value range according to a preset mapping relationship, and round the scale parameter mapping value obtained by mapping according to a rounding boundary value of the scale parameter mapping value to perform quantization, to obtain a scale parameter quantization value of the feature element; and

an entropy encoding module 1806, configured to perform entropy encoding on the feature map according to the scale parameter quantization value of each feature element in the feature map, and determine a transmission data stream according to an encoded data stream obtained by entropy encoding.

According to the foregoing video encoding apparatus, because the video encoding and decoding model is obtained by training by using the video encoding and decoding model processing method according to any one of the foregoing embodiments. After the scale parameter value output by the video encoding and decoding model is mapped according to the preset mapping relationship, the obtained scale parameter mapping value is offset toward a direction away from an adjacent rounding boundary value. Therefore, when a target video frame is encoded by using the video encoding and decoding model, the scale parameter mapping value obtained after the scale parameter value in the encoding process is mapped is away from the rounding boundary value as far as possible, whereby probability of a rounding jump occurring at a decoder in a quantization process is reduced, encoding and decoding may be performed in the encoding process and the decoding process based on the same quantization result, and then accuracy of a video frame obtained by reconstructing in the decoding process is improved.

In all embodiments of the present disclosure, the value quantization module 1804 is further configured to: screen a feature element satisfying a preset screening condition from the feature elements in the feature map, where the preset screening condition is that: a distance between the scale parameter mapping value of a screened feature element and a rounding boundary value that is adjacent to the scale parameter mapping value of the screened feature element is less than or equal to a preset threshold; round the scale parameter mapping value of each feature element in the feature map according to a respective rounding boundary value to perform quantization, to obtain a scale parameter quantization value of each feature element, where the scale parameter mapping value of an unscreened feature element is rounded according to a rounding boundary value of the scale parameter mapping value in a preset quantization mode, and the scale parameter mapping value of the screened feature element is rounded according to a rounding boundary value of the scale parameter mapping value in another preset quantization mode; and an entropy encoding module is further configured to: determine transmission data stream of the target video frame according to the encoded data stream obtained by entropy encoding and a feature element position of each screened feature element.

In all embodiments of the present disclosure, the value quantization module 1804 is further configured to: for each feature element in the feature map, round, according to a rounding boundary value in a preset quantization mode, a value obtained by adding a preset threshold to the scale parameter value of the feature element, to obtain a floating quantization upper limit value of the feature element; round, according to a rounding boundary value in a preset quantization mode, a value obtained by subtracting a preset threshold from the scale parameter value of the feature element, to obtain a floating quantization lower limit value of the feature element; and screen a feature element satisfying the preset screening condition from the feature elements in the feature map according to the floating quantization upper limit value and the floating quantization lower limit value of each feature element.

In all embodiments of the present disclosure, the value quantization module 1804 is further configured to: determine, for each feature element, a distance between the floating quantization upper limit value and the floating quantization lower limit value of the feature element; and screening a feature element from the feature map in a case that the distance is greater than zero.

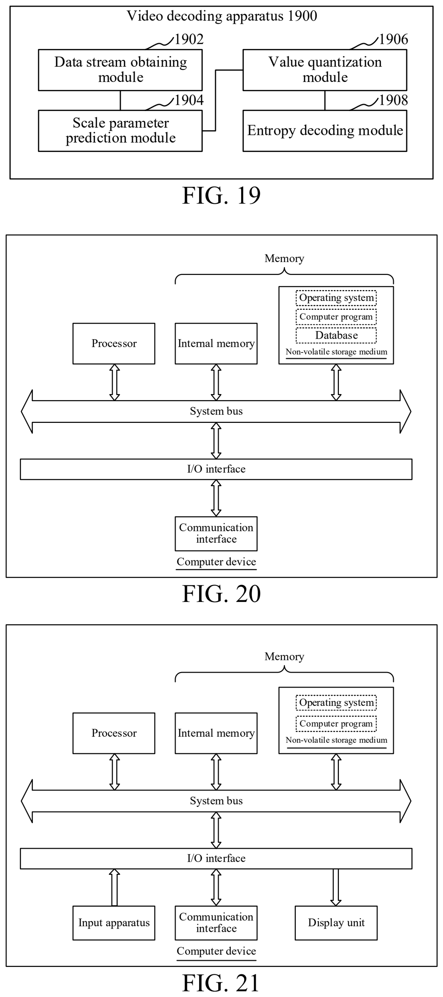

In all embodiments of the present disclosure, as shown in FIG. 19, a video decoding apparatus 1900 is provided, including:

a data stream obtaining module 1902, configured to obtain a transmission data stream, and obtain an encoded data stream from the transmission data stream, the encoded data stream being obtained by encoding a feature map of a target video frame;

a scale parameter prediction module 1904, configured to determine, by using a trained video encoding and decoding model, a scale parameter value corresponding to each feature element in the feature map, the video encoding and decoding model being obtained by training by using the apparatus according to claims 14 or 15;

a value quantization module 1906, configured to: for each feature element in the feature map, obtain a scale parameter mapping value after mapping the scale parameter value of the feature element to a preset mapping value range according to a preset mapping relationship, and round the scale parameter mapping value obtained by mapping according to a rounding boundary value of the scale parameter mapping value to perform quantization, to obtain a scale parameter quantization value of the feature element; and

an entropy decoding module 1908, configured to perform entropy decoding on the encoded data stream according to the scale parameter quantization value of each feature element in the feature map, and reconstruct the target video frame based on the feature map restored by the entropy decoding.

In all embodiments of the present disclosure, the transmission data stream further includes a calibration information byte stream, and the calibration information byte stream is configured for determining a plurality of feature element positions. The value quantization module 1906 is further configured to: screen a scale parameter value of the feature element at the determined feature element position from the scale parameter mapping value of each feature element in the feature map; and round the scale parameter mapping value of each feature element in the feature map according to a respective rounding boundary value to perform quantization, to obtain the scale parameter quantization value of each feature element, where an unscreened scale parameter mapping value is rounded according to a rounding boundary value of the scale parameter mapping value in a preset quantization mode, and a screened scale parameter mapping value is rounded according to a rounding boundary value of the scale parameter mapping value in another quantization mode.

According to the foregoing video decoding apparatus, because the video encoding and decoding model is obtained by training by using the video encoding and decoding model processing method according to any one of the foregoing embodiments. After the scale parameter value output by the video encoding and decoding model is mapped according to the preset mapping relationship, the obtained scale parameter mapping value is offset toward a direction away from an adjacent rounding boundary value. Therefore, when a target video frame is encoded by using the video encoding and decoding model, the scale parameter mapping value obtained after the scale parameter value in the decoding process is mapped is away from the rounding boundary value as far as possible, whereby probability of a rounding jump occurring in a quantization process is reduced, entropy decoding may be performed in the decoding process based on the same quantization result as that in the encoding process, and then accuracy of a video frame obtained by reconstructing in the decoding process is improved.

Various modules in foregoing apparatus may be completely or partially implemented through software, hardware, or a combination thereof. Each of the foregoing modules may be embedded in or independent of a processor in a computer device, or may be stored in a memory in the computer device in a software form, whereby the processor invokes the modules to perform operations corresponding to the foregoing modules.

In all embodiments of the present disclosure, a computer device is provided. The computer device may be a server, and a diagram of an internal structure of the computer device may be shown in FIG. 20. The computer device includes a processor, a memory, an input/output (referred to as I/O for short) interface, and a communication interface. The processor, the memory, and the I/O interface are connected with each other through a system bus. The communication interface is connected to the system bus through the I/O interface. The processor of the computer device is configured to provide computing and control capabilities. The memory of the computer device includes a non-volatile storage medium and an internal memory. The non-volatile storage medium stores an operating system, a computer program, and a database. The internal memory provides an environment for running of the operating system and the computer program in the non-volatile storage medium. The database of the computer device may be configured to store video data. The I/O interface of the computer device is configured to exchange information between the processor and an external device. The communication interface of the computer device is configured to connect and communicate with an external terminal through a network. The computer program, when executed by the processor, implements a video encoding and decoding model processing method, or a video encoding method, or a video decoding method.

In all embodiments of the present disclosure, a computer device is provided. The computer device may be a terminal, and a diagram of an internal structure of the computer device may be shown in FIG. 21. The computer device includes a processor, a memory, an input/output interface, a communication interface, a display unit, and an input apparatus. The processor, the memory, and the input/output interface are connected through a system bus. The communication interface, the display unit, and the input apparatus are connected to the system bus through the input/output interface. The processor of the computer device is configured to provide computing and control capabilities. The memory of the computer device includes a non-volatile storage medium and an internal memory. The non-volatile storage medium stores an operating system and a computer program. The internal memory provides an environment for running of the operating system and the computer program in the non-volatile storage medium. The input/output interface of the computer device is configured to exchange information between the processor and an external device. The communication interface of the computer device is configured to communicate with an external terminal in a wired or wireless mode. The wireless mode may be implemented through wireless fidelity (WIFI), a mobile cellular network, near field communication (NFC), or another technology. The computer program, when executed by the processor, implements a video encoding and decoding model processing method, or a video encoding method, or a video decoding method. The display unit of the computer device is configured to form a visually visible picture, and may be a display screen, a projection apparatus, or a virtual reality imaging apparatus. The display screen may be a liquid crystal display screen or an electronic ink display screen. An input apparatus of the computer device may be a touch layer covered on the display screen, or may be a key, a trackball, or a touch pad disposed on a housing of the computer device, or may be an external keyboard, a touch pad, a mouse, or the like.

It will be understood by those skilled in the art that structures shown in FIG. 20 and FIG. 21 are only block diagrams of a part of the structure related to a solution of this application, and do not constitute a limitation of the computer device to which the solution of this application is applied. A computer device may include more or fewer components than those shown in the figures, or combine some components, or have different component arrangements.

In all embodiments of the present disclosure, a computer device is provided, including a memory and a processor, the memory having a computer program stored therein, and the processor, when executing the computer program, implementing operations of any one of the foregoing video encoding and decoding model processing methods.

In all embodiments of the present disclosure, a computer-readable storage medium is provided, having a computer program stored therein, the computer program, when executed by a processor, implementing operations of any one of the foregoing video encoding and decoding model processing methods.

In all embodiments of the present disclosure, a computer program product is provided, including a computer program, the computer program, when executed by a processor, implementing operations of any one of the foregoing video encoding and decoding model processing methods.

In all embodiments of the present disclosure, another computer device is provided, including a memory and a processor, the memory having a computer program stored therein, and the processor, when executing the computer program, implementing operations of the foregoing video encoding method.

In all embodiments of the present disclosure, another computer-readable storage medium is provided, having a computer program stored therein, the computer program, when executed by a processor, implementing operations of the foregoing video encoding method.

In all embodiments of the present disclosure, another computer program product is provided, including a computer program, the computer program, when executed by a processor, implementing operations of the foregoing video encoding method.

In all embodiments of the present disclosure, another computer device is provided, including a memory and a processor, the memory having a computer program stored therein, and the processor, when executing the computer program, implementing operations of the foregoing video decoding method.

In all embodiments of the present disclosure, another computer-readable storage medium is provided, having a computer program stored therein, the computer program, when executed by a processor, implementing operations of the foregoing video decoding method.

In all embodiments of the present disclosure, another computer program product is provided, including a computer program, the computer program, when executed by a processor, implementing operations of the foregoing video decoding method.

Both user information (including, but not limited to, user equipment information, user personal information, and the like) and data (including, but not limited to, data for analysis, stored data, displayed data, and the like) involved in this application are information and data that are authorized by a user or fully authorized by all parties. Collection, use, and processing of related data need to comply with relevant laws and regulations of relevant countries and regions.

Those skilled in the art can understand that all or part of the processes in the above method embodiments may be implemented by a computer program instructing related hardware, and the computer program may be stored in a non-volatile computer-readable storage medium. When the computer program is executed, the processes of each method embodiment as described above may be included. Any reference to a memory, a database, or another medium used in all embodiments provided in the present disclosure may include at least one of a non-volatile or volatile memory. The non-volatile memory may include a read-only memory (ROM), a magnetic tape, a floppy disk, a flash memory, an optical memory, a high-density embedded nonvolatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM) or an external cache memory. By way of illustration but not limitation, the RAM may be in a variety of forms such as a static random access memory (SRAM), or a dynamic random access memory (DRAM). The database involved in all embodiments provided by the present disclosure may include at least one of a relational database and a non-relational database. The non-relational database may include, but is not limited to, a blockchain-based distributed database, and the like. The processor involved in all embodiments provided by the present disclosure may be, but is not limited to, a general-purpose processor, a central processing unit, a graphics processing unit, a digital signal processor, a programmable logic device, a quantum computing-based data processing logic device, and the like.

Various technical features of the above embodiments may be arbitrarily combined. To make the description concise, all possible combinations of the various technical features in the foregoing embodiments are not described. However, contradiction in the combinations of these technical features is considered to be in a range described in this specification as long as there is no conflict.

The foregoing embodiments only describe several implementations of this application, which are described in detail, but cannot be construed as a limitation to the patent scope of this application. For a person of ordinary skill in the art, several transformations and improvements can be made without departing from the idea of this application. These transformations and improvements belong to the protection scope of this application. Therefore, the scope of protection of this application is to be determined by the appended claims.

## Claims

1. A video encoding and decoding model processing method, executable by a computer device, the method comprising:

   obtaining a training video frame;
   extracting a feature map of the training video frame by using a video encoding and decoding model;
   for each feature element in the feature map, determining a scale parameter value corresponding to a feature element in the feature map;
   mapping, based on a preset mapping relationship, the scale parameter value to obtain a scale parameter mapping value within a preset mapping value range;
   obtaining a constraint reference mapping value corresponding to the scale parameter mapping value, wherein a first difference between the constraint reference mapping value and a rounding boundary value of the corresponding scale parameter mapping value is greater than a second difference between the scale parameter mapping value corresponding to the constraint reference mapping value and the rounding boundary value;
   determining a quantization constraint loss of the training video frame based on a third difference between the scale parameter mapping value corresponding to the feature element and the constraint reference mapping value corresponding to the scale parameter mapping value; and
   updating at least one model parameter of the video encoding and decoding model by using the quantization constraint loss, to obtain a trained video encoding and decoding model.

2. The method according to claim 1, wherein the determining a quantization constraint loss of the training video frame based on a third difference between the scale parameter mapping value corresponding to the feature element and the constraint reference mapping value corresponding to the scale parameter mapping value comprises:

   for each scale parameter mapping value, determining a quantization constraint sub-loss of the scale parameter mapping value based on the third difference between the scale parameter mapping value and a corresponding constraint reference mapping value;
   determining a loss weight of the scale parameter mapping value; and

determining the quantization constraint loss of the training video frame by using the quantization constraint sub-loss and the loss weight of the scale parameter mapping value.

3. The method according to claim 2, wherein the determining a loss weight of the scale parameter mapping value comprises:

determining an attribution relationship between the scale parameter mapping value and a preset value interval, wherein the scale parameter mapping value belongs to the preset value interval and the scale parameter mapping value obtained after encoding and decoding the feature element corresponding to the scale parameter mapping value has a consistent rounding result;
determining the loss weight of the scale parameter mapping value by using the attribution relationship between the scale parameter mapping value and the preset value interval; and
determining the quantization constraint loss of the training video frame by using the quantization constraint sub-loss and the loss weight of the scale parameter mapping value.

4. The method according to claim 3, wherein the determining the loss weight of the scale parameter mapping value by using the attribution relationship between the scale parameter mapping value and the preset value interval comprises:

determining a loss weight for the scale parameter mapping value that belongs to the preset value interval as a first weight; and
determining a loss weight for the scale parameter mapping value that does not belong to the preset value interval as a second weight, wherein the second weight is greater than the first weight.

5. The method according to any one of claims 1 to 4, wherein the determining a quantization constraint loss of the training video frame based on a third difference between the scale parameter mapping value corresponding to the feature element and the constraint reference mapping value corresponding to the scale parameter mapping value comprises:

for each scale parameter mapping value, obtaining a preset probability distribution relationship configured to map the scale parameter mapping value within the preset mapping value range to an expected probability value;
determining, by using the probability distribution relationship, a first expected probability value of the scale parameter mapping value and a second expected probability value of the constraint reference mapping value corresponding to the scale parameter mapping value;
determining a quantization constraint sub-loss of the scale parameter mapping value, based on a fourth difference between the first expected probability value of the scale parameter mapping value and the second expected probability value of the corresponding constraint reference mapping value; and
determining the quantization constraint loss of the training video frame by using the quantization constraint sub-loss of the scale parameter mapping value.

6. The method according to claim 5, wherein within a range from the constraint reference mapping value to a nearest rounding boundary value of the constraint reference mapping value within the preset mapping value range, a smaller difference between an input scale parameter mapping value and the constraint reference mapping value corresponds to a larger expected probability value generated by the probability distribution relationship.

7. The method according to any one of claims 1 to 6, wherein the obtaining a constraint reference mapping value corresponding to the scale parameter mapping value comprises:

determining, in a case that a rounding mode comprises rounding up or rounding down and each integer within the preset mapping value range is a rounding boundary value, an interval midpoint of a mapping value interval to which the scale parameter mapping value belongs as the constraint reference mapping value corresponding to the scale parameter mapping value,
wherein the mapping value interval is determined by two adjacent integer quantization levels within the preset mapping value range.

8. The method according to any one of claims 1 to 7, wherein the obtaining a constraint reference mapping value corresponding to each scale parameter mapping value comprises:
in a case that the rounding mode comprises rounding to nearest and the interval midpoint of the mapping value interval is the rounding boundary value, for each scale parameter mapping value, determining a nearest integer boundary value within the mapping value interval to which the scale parameter mapping value belongs as the constraint reference mapping value corresponding to the scale parameter mapping value, wherein the mapping value interval is determined by two adjacent integer quantization levels within the preset mapping value range.

9. A video encoding and decoding model processing method, executable by a computer device, and the method comprising:

   obtaining a training video frame;
   extracting a feature map of the training video frame by using a video encoding and decoding model;
   for each feature element in the feature map, determining a scale parameter value corresponding to a feature element in the feature map;
   obtaining a constraint reference value corresponding to the scale parameter value,
   wherein in a case that the constraint reference value is mapped to a preset mapping value range based on a preset mapping relationship, a first difference between the mapped constraint reference value and a rounding boundary value is greater than a second difference between a scale parameter mapping value obtained by mapping the corresponding scale parameter value and the rounding boundary value;
   determining a quantization constraint loss of the training video frame based on a third difference between the scale parameter value and the corresponding constraint reference value; and
   updating at least one model parameter of the video encoding and decoding model based on the quantization constraint loss, to obtain a trained video encoding and decoding model.

10. The method according to claim 9, wherein the determining a quantization constraint loss of the training video frame based on a third difference between the scale parameter value and the corresponding constraint reference value comprises:

   for each scale parameter value, determining, based on the third difference between the scale parameter value and the corresponding constraint reference value, a quantization constraint sub-loss of the scale parameter value;
   determining a loss weight of the scale parameter value; and
   determining a quantization constraint loss of the training video frame based on the quantization constraint sub-loss and the loss weight of the scale parameter value.

11. The method according to claim 10, wherein the determining a loss weight of the scale parameter value comprises:

   for each scale parameter value, determining an attribution relationship between the scale parameter value and a preset value interval,
   wherein the scale parameter value belongs to the preset value interval and the scale parameter value obtained after encoding and decoding the feature element of the scale parameter value has a consistent quantization result;
   determining the loss weight of the scale parameter value based on the attribution relationship between the scale parameter value and the preset value interval; and
   determining a quantization constraint loss of the training video frame based on the quantization constraint sub-loss and the loss weight of the scale parameter value.

12. The method according to any one of claims 9 to 11, wherein the determining a quantization constraint loss of the training video frame based on a third difference between the scale parameter value and the corresponding constraint reference value comprises:

   obtaining a preset probability distribution relationship configured to map the scale parameter value to an expected probability value;
   determining, by using the probability distribution relationship, a first expected probability value of the scale parameter value and a second expected probability value of the constraint reference value corresponding to the scale parameter value;
   determining the quantization constraint sub-loss of the scale parameter value, based on a fourth difference between the first expected probability value of the scale parameter value and the second expected probability value of the corresponding constraint reference value; and
   determining the quantization constraint loss of the training video frame based on the quantization constraint sub-loss of the scale parameter value.

13. The method according to claim 12, wherein in a domain of the scale parameter value, within a range from the constraint reference value to the scale parameter value that is nearest the constraint reference value and that is configured for mapping to a rounding boundary value, a smaller difference between the scale parameter value input into the probability distribution relationship and the constraint reference value indicates a larger expected probability value output by the probability distribution relationship.

14. A video encoding method, executable by a computer device, and the method comprising:

obtaining a video frame,
extracting a feature map of the video frame by using a trained video encoding and decoding model,
for each feature element in the feature map, determining a scale parameter value corresponding to a feature element in the feature map, wherein the video encoding and decoding model is obtained after training by using the method according to any one of claims 1 to 13;
obtaining a scale parameter mapping value after mapping the scale parameter value of the feature element to a preset mapping value range based on a preset mapping relationship;
rounding the scale parameter mapping value obtained by mapping based on a rounding boundary value of the scale parameter mapping value to perform quantization, to obtain a scale parameter quantization value of the feature element; and
performing entropy encoding on the feature map based on the scale parameter quantization value of the feature element in the feature map, and determining a transmission data stream based on an encoded data stream obtained by entropy encoding.

15. A video decoding method, executable by a computer device, and the method comprising:

obtaining a transmission data stream, and obtaining an encoded data stream from the transmission data stream, wherein the encoded data stream is obtained after encoding a feature map of a video frame;
for each feature element in a feature map, determining, by using a trained video encoding and decoding model, a scale parameter value corresponding to a feature element in the feature map, wherein the video encoding and decoding model is obtained after training by using the method according to any one of claims 1 to 13;
obtaining a scale parameter mapping value after mapping the scale parameter value of the feature element to a preset mapping value range based on a preset mapping relationship;
rounding the scale parameter mapping value obtained by mapping based on a rounding boundary value of the scale parameter mapping value to perform quantization, to obtain a scale parameter quantization value of the feature element; and
performing entropy decoding on the encoded data stream based on the scale parameter quantization value of the feature element in the feature map, and reconstructing the video frame based on the feature map restored by the entropy decoding.

16. A video encoding and decoding model processing apparatus, comprising:

a video frame obtaining module, configured to: obtain a training video frame, extract a feature map of the training video frame by using a video encoding and decoding model, and determine a scale parameter value corresponding to each feature element in the feature map;
a value mapping module, configured to map, according to a preset mapping relationship, the scale parameter value corresponding to each feature element to obtain a scale parameter mapping value corresponding to each feature element, the scale parameter mapping value being within a preset mapping value range;
a loss determination module, configured to obtain a constraint reference mapping value corresponding to each scale parameter mapping value, and determine a quantization constraint loss of the training video frame based on a difference between the scale parameter mapping value corresponding to each feature element and the constraint reference mapping value corresponding to the scale parameter mapping value, a distance between the constraint reference mapping value and a rounding boundary value of the scale parameter mapping value corresponding to the constraint reference mapping value being farther than a distance between the scale parameter mapping value corresponding to the constraint reference mapping value and the rounding boundary value; and
a parameter update module, configured to update at least a part of model parameters of the video encoding and decoding model based on the quantization constraint loss, to obtain a trained video encoding and decoding model.

**17.** A video encoding and decoding model processing apparatus, comprising:

a video frame obtaining module, configured to: obtain a training video frame, extract a feature map of the training video frame by using a video encoding and decoding model, and determine a scale parameter value corresponding to each feature element in the feature map;

a loss determination module, configured to obtain a constraint reference value corresponding to each scale parameter value, and determine a quantization constraint loss of the training video frame based on a difference between each scale parameter value and the corresponding constraint reference value, after being separately mapped to a preset mapping value range according to a preset mapping relationship, the constraint reference value being farther from a rounding boundary value of a scale parameter mapping value obtained by mapping the corresponding scale parameter value than a scale parameter value corresponding to the constraint reference value; and

a parameter update module, configured to update at least a part of model parameters of the video encoding and decoding model based on the quantization constraint loss, to obtain a trained video encoding and decoding model.

**18.** A video encoding apparatus, comprising:

a video frame obtaining module, configured to obtain a target video frame, extract a feature map of the target video frame by using a trained video encoding and decoding model, and determine a scale parameter value corresponding to each feature element in the feature map, the video encoding and decoding model being obtained by training by using the apparatus according to claim 16 or 17;

a value quantization module, configured to obtain a scale parameter mapping value after mapping the scale parameter value of each feature element to a preset mapping value range according to a preset mapping relationship, and round the scale parameter mapping value obtained by mapping according to a rounding boundary value of the scale parameter mapping value to perform quantization, to obtain a scale parameter quantization value of each feature element; and

an entropy encoding module, configured to perform entropy encoding on the feature map according to the scale parameter quantization value of each feature element in the feature map, and determine a transmission data stream according to an encoded data stream obtained by entropy encoding.

**19.** A video decoding apparatus, comprising:

a data stream obtaining module, configured to obtain a transmission data stream, and obtain an encoded data stream from the transmission data stream, the encoded data stream being obtained by encoding a feature map of a target video frame;

a scale parameter prediction module, configured to determine, by using a trained video encoding and decoding model, a scale parameter value corresponding to each feature element in the feature map, the video encoding and decoding model being obtained by training by using the apparatus according to claims 16 or 17;

a value quantization module, configured to obtain a scale parameter mapping value after mapping the scale parameter value of each feature element to a preset mapping value range according to a preset mapping relationship, and round the scale parameter mapping value obtained by mapping according to a rounding boundary value of the scale parameter mapping value to perform quantization, to obtain a scale parameter quantization value of each feature element; and

an entropy decoding module, configured to perform entropy decoding on the encoded data stream according to the scale parameter quantization value of each feature element in the feature map, and reconstruct the target video frame based on the feature map restored by the entropy decoding.

**20.** A computer device, comprising a memory and a processor, the memory having a computer program stored therein, and the processor executing the computer program to implement operations of the method according to any one of claims 1 to 15.

**21.** A computer-readable storage medium, having a computer program stored therein, the computer program being executed by a processor to implement operations of the method according to any one of claims 1 to 15.

**22.** A computer program product, comprising a computer program, the computer program being executed by a processor to implement operations of the method according to any one of claims 1 to 15.

FIG. 1

Operation 202

Obtain a training video frame, extract a feature map of the training video frame by using a video encoding and decoding model, and determine a scale parameter value corresponding to each feature element in the feature map

Operation 204

Map, according to a preset mapping relationship, the scale parameter value corresponding to each feature element to obtain a scale parameter mapping value, the scale parameter mapping value being within a preset mapping value range

Operation 206

Obtain a constraint reference mapping value corresponding to each scale parameter mapping value, a distance between the constraint reference mapping value and a rounding boundary value of the scale parameter mapping value corresponding to the constraint reference mapping value being farther than a distance between the scale parameter mapping value corresponding to the constraint reference mapping value and the rounding boundary value

Operation 208

Determine a quantization constraint loss of the training video frame based on a difference between the scale parameter mapping value corresponding to each feature element and the constraint reference mapping value corresponding to each scale parameter mapping value

Operation 210

Update at least a part of model parameters of the video encoding and decoding model based on the quantization constraint loss, to obtain a trained video encoding and decoding model

FIG. 2

Operation 302

Obtain a training video frame, extract a feature map of the training video frame by using a video encoding and decoding model, and determine a scale parameter value corresponding to each feature element in the feature map

Operation 304

Obtain a constraint reference value corresponding to each scale parameter value, and determine a quantization constraint loss of the training video frame based on a difference between each scale parameter value and the corresponding constraint reference value

Operation 306

Update at least a part of model parameters of the video encoding and decoding model based on the quantization constraint loss, to obtain a trained video encoding and decoding model

FIG. 3

Operation 402

Obtain a target video frame, extract a feature map of the target video frame by using a trained video encoding and decoding model, and determine a scale parameter value corresponding to each feature element in the feature map

Operation 404

Map, according to a preset mapping relationship, the scale parameter value corresponding to each feature element to obtain a scale parameter mapping value, the scale parameter mapping value being within a preset mapping value range

Operation 406

Round the scale parameter mapping value obtained by mapping according to a rounding boundary value of the scale parameter mapping value to perform quantization, to obtain a scale parameter quantization value of the feature element

Operation 408

Perform entropy encoding on the feature map according to the scale parameter quantization value of each feature element in the feature map, and determine a transmission data stream according to an encoded data stream obtained by entropy encoding

FIG. 4

Operation 502

Obtain a transmission data stream, and obtain an encoded data stream from the transmission data stream, the encoded data stream being obtained by encoding a feature map of a target video frame

Operation 504

Determine, by using a trained video encoding and decoding model, a scale parameter value corresponding to each feature element in the feature map

Operation 506

Map, according to a preset mapping relationship, the scale parameter value corresponding to each feature element to obtain a scale parameter mapping value, the scale parameter mapping value being within a preset mapping value range

Operation 508

Round the scale parameter mapping value obtained by mapping according to a rounding boundary value of the scale parameter mapping value to perform quantization, to obtain a scale parameter quantization value of the feature element

Operation 510

Perform entropy decoding on the encoded data stream according to the scale parameter quantization value of each feature element in the feature map, and reconstruct the target video frame based on the feature map restored by the entropy decoding

FIG. 5

FIG. 6

FIG. 7

```
┌─────────────────────┐                      ┌─────────────────────┐
│  Hyper-prior (z)    │ ───────────────────▶ │ Hyper-prior decoding │
└─────────────────────┘                      └─────────────────────┘
          ▲                                             │
          │                                             │
┌─────────────────────┐                 ┌───────────────┴───────────────┐
│ Hyper-prior encoding │                 │                               │
└─────────────────────┘                 ▼                               ▼
          ▲                   ┌─────────────────────┐     ┌─────────────────────┐
          │                   │ Position parameter  │     │ Scale parameter value │
┌─────────────────────┐       │    value (μ)        │     │        (σ)            │
│ To-be-encoded feature│      └─────────────────────┘     └─────────────────────┘
│      map (y)        │                                             │
└─────────────────────┘                                            │
          │                        ┌─────────────────────┐          │
          └──────────────────────▶ │   Entropy model     │ ◀────────┘
                                   │    constraint       │
                                   └─────────────────────┘
```

FIG. 8a

```
┌─────────────────────┐        ┌─────────────────────┐
│  Hyper-prior (z)    │ ─────▶ │    Hyper-prior      │
└─────────────────────┘        │     decoding        │
          ▲                    └─────────────────────┘
          │                               │
┌─────────────────────┐        ┌──────────┴──────────┐
│    Hyper-prior      │        │                     │
│     encoding        │        ▼                     ▼
└─────────────────────┘   ┌──────────────┐   ┌──────────────┐   ┌──────────────────┐
          ▲               │   Position   │   │    Scale     │   │ Scale parameter  │
          │               │  parameter   │   │  parameter   │──▶│ mapping value (I)│
┌─────────────────────┐   │  value (μ)   │   │  value (σ)   │   └──────────────────┘
│   To-be-encoded     │   └──────────────┘   └──────────────┘           │
│  feature map (y)    │                             │                   ▼
└─────────────────────┘        ┌──────────────┐     │        ┌──────────────────┐
          │                    │   Entropy    │ ◀───┘        │ Piecewise Gaussian│
          └──────────────────▶ │    model     │              │ function-based    │
                               │  constraint  │              │   constraint      │
                               └──────────────┘              └──────────────────┘
```

FIG. 8b

```
┌─────────────────┐              ┌─────────────────┐
│  Original data  │              │ Reconstructed   │
│                 │              │  video frame    │
└────────┬────────┘              └────────┬────────┘
         │                                │
         ▼                                ▼
┌─────────────────┐              ┌─────────────────┐
│ Encoding module │              │ Decoding module │
│                 │              │                 │
└────────┬────────┘              └────────┬────────┘
         │                                │
         ▼                                ▼
┌─────────────────┐              ┌─────────────────┐
│ Feature map (y) │              │ Restored feature│
│                 │              │  map (y_hat)    │
└────────┊────────┘              └────────┊────────┘
         ┊                                ┊
         ┊         Transmission           ┊
         └┄┄┄┄┄┄┄┄┄┄┄┄┄┄┄┄┄┄┄┄┄┄┄┄┄┄┄┄┄┄┄┘
```

## FIG. 9

```
┌─────────────────┐         ┌─────────────────┐
│ Hyper-prior (z) │────────▶│   Hyper-prior   │
│                 │         │    decoding     │
└────────▲────────┘         └────────┬────────┘
         │                           │
┌────────┴────────┐          ┌───────┴────────┐
│   Hyper-prior   │          │                │
│    encoding     │          ▼                ▼
└────────▲────────┘   ┌────────────┐  ┌──────────────┐  ┌──────────────┐
         │            │  Position  │  │   Scale      │  │    Scale     │
┌────────┴────────┐   │ parameter  │  │  parameter   │─▶│  parameter   │
│  To-be-encoded  │   │ value (μ)  │  │  value (σ)   │  │ quantization │
│ feature map (y) │   └────────────┘  └──────────────┘  │  value (Ï)   │
└────────┬────────┘                                     └──────┬───────┘
         │                                                     │
         │                                                     ▼
         │                   ┌──────────────┐         ┌──────────────┐
         │                   │  Arithmetic  │         │ Probability  │
         │                   │   coding     │◀────────│ distribution │
         │                   │ probability  │         │  function    │
         │                   │distribution(θ)│         │look-up table │
         │                   └──────┬───────┘         └──────────────┘
         │                          │
         ▼                          ▼
      ┌──────────────────────────────┐
      │       Entropy encoding       │
      └──────────────┬───────────────┘
                     │
                     ▼
            ┌──────────────┐
            │ Encoded byte │
            │   stream     │
            └──────────────┘
```

## FIG. 10

FIG. 11

FIG. 12

FIG. 13

UVG dataset

FIG. 14

| Precision parameter | W/O PGC | W PGC | Increase rate |
|---|---|---|---|
| Bit rate | | | |
| €=0 | −25.6% | - | - |
| €=le−4 | −24.8% | −24.2% | 0.6% |
| €=le−3 | −17.1% | −18.7% | −1.6% |
| €=le−2 | 59.4% | 36.7% | −22.7% |
| Coordinate quantity | | | |
| €=le−4 | 114.8 | 82.4 | −28.2% |
| €=le−3 | 1141.7 | 825.7 | −27.7% |
| €=le−2 | 11414.9 | 8256.7 | −27.7% |

FIG. 15

Video encoding and decoding model processing apparatus 1600

1602
Video frame obtaining module

1604
Value mapping module

1606
Loss determination module

1608
Parameter update module

FIG. 16

Video encoding and decoding model processing apparatus 1700

1702
Video frame obtaining module

1704
Loss determination module

1706
Parameter update module

FIG. 17

Video encoding apparatus 1800

1802
Video frame obtaining module

1804
Value quantization module

1806
Entropy encoding module

FIG. 18

Video decoding apparatus 1900

Data stream obtaining module ~1902

Scale parameter prediction module ~1904

Value quantization module ~1906

Entropy decoding module ~1908

FIG. 19

Memory

Processor

Internal memory

Operating system
Computer program
Database
Non-volatile storage medium

System bus

I/O interface

Communication interface

Computer device

FIG. 20

Memory

Processor

Internal memory

Operating system
Computer program
Non-volatile storage medium

System bus

I/O interface

Input apparatus

Communication interface

Display unit

Computer device

FIG. 21

## INTERNATIONAL SEARCH REPORT

| International application No. |
| --- |
| **PCT/CN2024/107495** |

**A. CLASSIFICATION OF SUBJECT MATTER**

H04N 19/124(2014.01)i; H04N19/13(2014.01)i; H04N19/91(2014.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, DWPI, VEN, JPTXT, WOTXT, USTXT, IEEE, CNKI, 万方, WANFANG, 必应, BING, 谷歌学术, GOOGLE SCHOLAR: 视频, 媒体, 编解码, 编码, 解码, 尺寸, 尺度, 对应, 对照, 映射, 距离, 取整, 特征, 训练, 约束, 损失, 模型, 神经网络, 深度学习, RNN, CNN, code, decode, encode, constraint, correspondence, feature, map, scale, size, transform, round, train, loss, model, neural network, deep learning, distance

**C. DOCUMENTS CONSIDERED TO BE RELEVANT**

| Category* | Citation of document, with indication, where appropriate, of the relevant passages | Relevant to claim No. |
| --- | --- | --- |
| PX | CN 117319652 A (TENCENT TECHNOLOGY (SHENZHEN) CO., LTD.) 29 December 2023 (2023-12-29) claims 1-20, description, paragraphs [0123]-[0376], and figures 1-21 | 1-22 |
| A | CN 116600119 A (TENCENT TECHNOLOGY (SHENZHEN) CO., LTD.) 15 August 2023 (2023-08-15) description, paragraphs [0024]-[0157], and figures 1-16 | 1-22 |
| A | CN 114332479 A (INSPUR (BEIJING) ELECTRONIC INFORMATION INDUSTRY CO., LTD.) 12 April 2022 (2022-04-12) entire document | 1-22 |
| A | US 2023179774 A1 (TENCENT AMERICA LLC) 08 June 2023 (2023-06-08) entire document | 1-22 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **19 October 2024** | **22 October 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/107495** |

**C.    DOCUMENTS CONSIDERED TO BE RELEVANT**

| Category* | Citation of document, with indication, where appropriate, of the relevant passages | Relevant to claim No. |
| --- | --- | --- |
| A | SHLEZINGER, Nir et al. "Federated Learning with Quantization Constraints" *2020 IEEE International Conference on Acoustics, Speech and Signal Processing (ICASSP)*, 09 April 2020 (2020-04-09), pages 8851-8855 <br>     entire document | 1-22 |

Form PCT/ISA/210 (second sheet) (July 2022)

INTERNATIONAL SEARCH REPORT
Information on patent family members

International application No.

**PCT/CN2024/107495**

| Patent document cited in search report | | | Publication date (day/month/year) | Patent family member(s) | | | Publication date (day/month/year) |
|---|---|---|---|---|---|---|---|
| CN | 117319652 | A | 29 December 2023 | HK | 40098410 | A0 | 05 April 2024 |
| CN | 116600119 | A | 15 August 2023 | CN | 116600119 | B | 03 November 2023 |
| CN | 114332479 | A | 12 April 2022 | | None | | |
| US | 2023179774 | A1 | 08 June 2023 | US | 12096000 | B2 | 17 September 2024 |
| | | | | WO | 2023107773 | A1 | 15 June 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023112566635